# EUROPEAN PATENT APPLICATION

(11) **EP 4 564 719 A1**
(43) Date of publication of application: **04.06.2025**
(21) Application number: 23845239.5
(22) Date of filing: 30.06.2023
(51) Int. Cl.: H04L 5/00

(54) **SIGNAL TRANSMISSION METHOD, DEVICE AND APPARATUS, AND STORAGE MEDIUM**

(30) Priority: 29.07.2022 CN 202210908496
(71) Applicant: Datang Mobile Communications Equipment Co., Ltd., Beijing 100085 (CN)
(72) Inventor: SU, Yuwan, Beijing 100085 (CN); WANG, Jiaqing, Beijing 100085 (CN); CHENG, Fangchen, Beijing 100085 (CN); LUO, Chen, Beijing 100085 (CN); YANG, Meiying, Beijing 100085 (CN)
(74) Representative: Studio Torta S.p.A.
(86) International application number: PCT/CN2023/104691
(87) International publication number: WO 2024/022026

(57) **Abstract**

Provided in the embodiments of the present application are a signal transmission method, device and apparatus, and a storage medium, which are applied to a terminal. The method comprises: determining a resource position of a first signal, wherein the resource position of the first signal is within at least one second time domain range included in a first time domain range; and receiving the first signal at the resource position of the first signal.

## Description

### CROSS-REFERENCES TO RELATED APPLICATIONS

The present application claims priorities to Chinese patent application No. 202210908496.7 filed on July 29, 2022, entitled "Signal Transmission Method, Device and Apparatus, and Storage Medium", which is hereby incorporated by reference in its entirety.

### FIELD

The present application relates to the field of radio communications, and in particular, to methods and apparatuses for signal transmission, devices and a storage medium.

### BACKGROUND

In 5G networks, energy consumption is about 2 to 3 times than that of 4G networks. Therefore, research on energy saving technologies for 5G networks is urgent. Network energy saving technologies can be developed from a time domain, a frequency domain, a spatial domain, a power domain, etc. In terms of time domain energy saving technologies, solutions have been proposed to reduce transmission of public signals by extending transmission periods of public signals, or to reduce energy consumption of a network device by turning off cells when necessary.

However, although the above solutions can reduce network power consumption, a terminal (also known as a user equipment (UE)) may not be able to synchronize well with a base station when adopting these solutions, thereby affecting performance of the terminal.

### BRIEF SUMMARY

In view of the problems existing in the related art, embodiments of the present application provide methods and apparatuses for signal transmission, devices and storage medium.

An embodiment of the present application provides a method for signal transmission, performed by a terminal, including:
determining a resource location of a first signal, where the resource location of the first signal is within at least one second time domain range included in a first time domain range; and
receiving the first signal at the resource location of the first signal.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the method further includes:
determining a resource location of a second signal based on the resource location of the first signal determined within the first time domain range, where the second signal is used to trigger a first access node to determine the resource location of the first signal based on the M second time domain ranges; and
transmitting the second signal to the first access node based on the determined resource location of the second signal.

Optionally, the second signal further carries parameter information for adjusting a time length of the first time domain range and/or a time length of the second time domain range.

Optionally, after determining the resource location of the first signal based on the M second time domain ranges, the method further includes:
determining a resource location of a third signal based on a resource location of the first signal determined within a specified second time domain range, where the third signal is used to trigger a state transition of a first access node; and
transmitting the third signal to the first access node based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

An embodiment of the present application further provides a method for signal transmission, performed by a first access node, including:
determining a resource location of a first signal, where the resource location of the first signal is within at least one second time domain range included in a first time domain range; and
transmitting the first signal at the resource location of the first signal.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the method further includes:
receiving a first message transmitted from a terminal or a second access node, where the first message is used to trigger the first access node to determine the resource location of the first signal based on the M second time domain ranges.

Optionally, receiving the first message transmitted from the terminal includes:
determining a resource location of a second signal based on the resource location of the first signal determined within the first time domain range, where the second signal is used to trigger the first access node to determine the resource location of the first signal based on the M second time domain ranges; and
receiving the second signal transmitted from the terminal based on the determined resource location of the second signal.

Optionally, the first message further carries parameter information for adjusting a time length of the first time domain range and/or a time length of the second time domain range.

Optionally, after determining the resource location of the first signal based on the M second time domain ranges, the method further includes:
determining a resource location of a third signal based on a resource location of the first signal determined within a specified second time domain range, where the third signal is used to trigger a state transition of the first access node; and
receiving the third signal based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

Optionally, the first access node is in an off state, a deactivated state, or an energy saving state.

Optionally, the method further includes:
transmitting parameter indication information to a terminal and/or a second access node, where the parameter indication information is used to indicate one or more of the following:
a time length of the first time domain range, a time length of the second time domain range, a value of M, a value of N, a value of a first parameter, a value of a second parameter, or a value of a third parameter.

An embodiment of the present application further provides a method for signal transmission, performed by a second access node, including:
transmitting a first message to a first access node, where the first message is used to trigger the first access node to determine a resource location of a first signal based on at least one second time domain range included in a first time domain range.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, the first message further carries parameter information for adjusting a time length of the first time domain range and/or a time length of the second time domain range.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing the following operations:
determining a resource location of a first signal, where the resource location of the first signal is within at least one second time domain range included in a first time domain range; and
receiving the first signal at the resource location of the first signal.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the operations further include:
determining a resource location of a second signal based on the resource location of the first signal determined within the first time domain range, where the second signal is used to trigger a first access node to determine the resource location of the first signal based on the M second time domain ranges; and
transmitting the second signal to the first access node based on the determined resource location of the second signal.

Optionally, the second signal further carries parameter information for adjusting a time length of the first time domain range and/or a time length of the second time domain range.

Optionally, after determining the resource location of the first signal based on the M second time domain ranges, the operations further include:
determining a resource location of a third signal based on a resource location of the first signal determined within a specified second time domain range, where the third signal is used to trigger a state transition of a first access node; and
transmitting the third signal to the first access node based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

An embodiment of the present application further provides a first access node, including a memory, a transceiver, and a processor,
where the memory is used for storing a computer program, the transceiver is used for receiving and transmitting data under control of the processor, and the processor is used for reading the computer program in the memory and performing the following operations:
determining a resource location of a first signal, where the resource location of the first signal is within at least one second time domain range included in a first time domain range; and
transmitting the first signal at the resource location of the first signal.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the operations further include:
receiving a first message transmitted from a terminal or a second access node, where the first message is used to trigger the first access node to determine the resource location of the first signal based on the M second time domain ranges.

Optionally, receiving the first message transmitted from the terminal includes:
determining a resource location of a second signal based on the resource location of the first signal determined within the first time domain range, where the second signal is used to trigger the first access node to determine the resource location of the first signal based on the M second time domain ranges; and
receiving the second signal transmitted from the terminal based on the determined resource location of the second signal.

Optionally, the first message further carries parameter information for adjusting a time length of the first time domain range and/or a time length of the second time domain range.

Optionally, after determining the resource location of the first signal based on the M second time domain ranges, the operations further include:
determining a resource location of a third signal based on a resource location of the first signal determined within a specified second time domain range, where the third signal is used to trigger a state transition of the first access node; and
receiving the third signal based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

Optionally, the first access node is in an off state, a deactivated state, or an energy saving state.

Optionally, the operations further include:
transmitting parameter indication information to a terminal and/or a second access node, where the parameter indication information is used to indicate one or more of the following:
a time length of the first time domain range, a time length of the second time domain range, a value of M, a value of N, a value of a first parameter, a value of a second parameter, or a value of a third parameter.

An embodiment of the present application further provides a second access node, including a memory, a transceiver and a processor,
where the memory is used for storing a computer program, the transceiver is used for receiving and transmitting data under control of the processor, and the processor is used for reading the computer program in the memory and performing the following operations:
transmitting a first message to a first access node, where the first message is used to trigger the first access node to determine a resource location of a first signal based on at least one second time domain range included in a first time domain range.

Optionally, the first signal is used for one or more of synchronization, cell discovery, or measurement.

Optionally, the second time domain range satisfies one or more of the following:
a time length of each second time domain range being equal;
the at least one second time domain range being multiple consecutive second time domain ranges within the first time domain range; or
the first time domain range including N second time domain ranges, where N is an integer greater than M, and M is a quantity of the at least one second time domain range.

Optionally, the first message further carries parameter information for adjusting a time length of the first time domain range and/or a time length of the second time domain range.

An embodiment of the present application further provides an apparatus for signal transmission, including:
a first determining unit, used for determining a resource location of a first signal, where the resource location of the first signal is within at least one second time domain range included in a first time domain range; and
a first receiving unit, used for receiving the first signal at the resource location of the first signal.

An embodiment of the present application further provides an apparatus for signal transmission, including:
a second determining unit, used for determining a resource location of a first signal, where the resource location of the first signal is within at least one second time domain range included in a first time domain range; and
a second transmitting unit, used for transmitting the first signal at the resource location of the first signal.

An embodiment of the present application further provides an apparatus for signal transmission, including:
a third transmitting unit, used for transmitting a first message to a first access node, where the first message is used to trigger the first access node to determine a resource location of a first signal based on at least one second time domain range included in a first time domain range.

An embodiment of the present application further provides a computer-readable storage medium, where the computer-readable storage medium stores a computer program, and the computer program is used to cause a computer to perform the methods for signal transmission described above.

An embodiment of the present application further provides a communication device, where the communication device stores a computer program, and the computer program is used to cause a communication device to perform the methods for signal transmission described above.

An embodiment of the present application further provides a processor-readable storage medium, the processor-readable storage medium stores a computer program, and the computer program is used to cause a processor to perform the methods for signal transmission described above.

An embodiment of the present application further provides a chip product, where the chip product stores a computer program, the computer program is used to cause the chip product to perform the methods for signal transmission described above.

In the methods and apparatuses for signal transmission, devices and storage mediums provided by the embodiment of the present application, at least one second time domain range is within the first time domain range. The terminal may determine the resource location of the first signal within at least one second time domain range included in the first time domain range, and receive the first signal at the determined resource location of the first signal, thereby increasing an opportunity for the terminal to receive the first signal, ensuring good synchronization between the terminal and the first access node, and reducing power consumption of a network device.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of an energy saving solution by extending a public signal period provided by the related art;
FIG. 2 is a schematic diagram of an energy saving solution by semi-statically or dynamically turning off a cell provided by the related art;
FIG. 3 is a first schematic flowchart of a method for signal transmission according to an embodiment of the present application;
FIG. 4 is a second schematic flowchart of a method for signal transmission according to an embodiment of the present application;
FIG. 5 is a third schematic flowchart of a method for signal transmission according to an embodiment of the present application;
FIG. 6 is a first schematic diagram of a first access node transmitting a first signal according to an embodiment of the present application;
FIG. 7 is a second schematic diagram of a first access node transmitting a first signal according to an embodiment of the present application;
FIG. 8 is a schematic diagram of a terminal transmitting a third signal according to an embodiment of the present application;
FIG. 9 is a third schematic diagram of a first access node transmitting a first signal according to an embodiment of the present application;
FIG. 10 is a fourth schematic diagram of a first access node transmitting a first signal according to an embodiment of the present application;
FIG. 11 is a schematic structural diagram of a terminal according to an embodiment of the present application;
FIG. 12 is a schematic structural diagram of a first access node according to an embodiment of the present application;
FIG. 13 is a schematic structural diagram of a second access node according to an embodiment of the present application;
FIG. 14 is a first schematic structural diagram of an apparatus for signal transmission according to an embodiment of the present application;
FIG. 15 is a second schematic structural diagram of an apparatus for signal transmission according to an embodiment of the present application; and
FIG. 16 is a third schematic structural diagram of an apparatus for signal transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions of the embodiments of the present application may be clearly and completely described in combination with the drawings of the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to more clearly explain the protection scheme of the present application, the relevant technologies of embodiments of the present application are first introduced.

Public signals may include but are not limited to the following: a synchronization signal block (SSB), a system information block (SIB) 1, other SIBs, a paging signal, a physical random access channel (PRACH), etc.

The protocol specifies that a default SSB transmission period of the UE is 20 ms. For a cell that supports initial cell search, an actual SSB transmission period can be 5 ms, 10 ms and 20 ms, but not longer than 20 ms. For a cell that does not support initial cell search, an SSB transmission period can be configured as {5, 10, 20, 40, 80, 160}ms. After completing the initial cell search, the UE can obtain the actual SSB transmission period of the cell through configuration information. For a cell where network does not indicate an SSB transmission period, the UE should assume that an actual SSB transmission period is 5 ms.

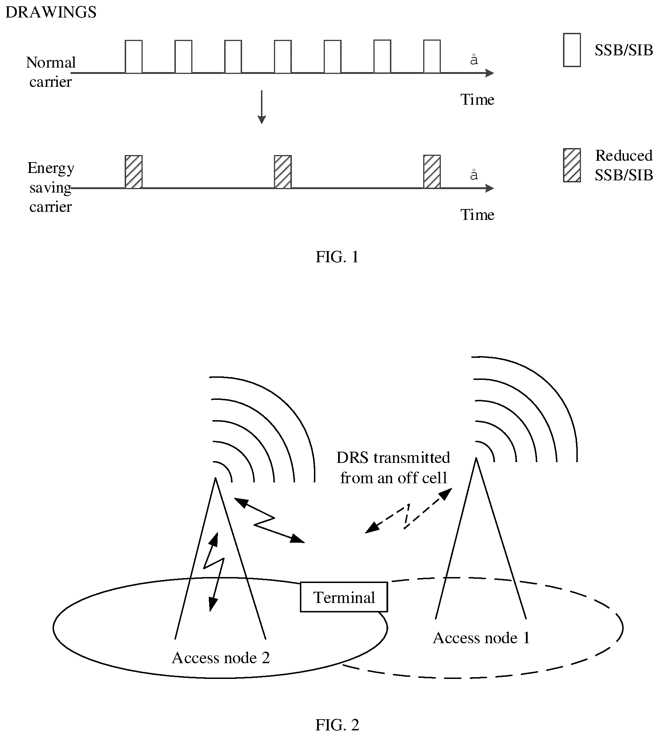

A traditional maximum SSB transmission period is 160 ms. Therefore, a possible network energy saving solution is to reduce transmission of public signals by extending periods of public signals, thereby achieving network energy saving. FIG. 1 is a schematic diagram of an energy saving solution by extending a public signal period provided by the related art. As shown in FIG. 1, on a normal carrier, an SSB is transmitted based on a period specified by a traditional protocol, such as, 80 ms. For the purpose of network energy saving, an SSB transmission period may also be extended on an energy saving carrier, for example, SSB is transmitted at a period of 320 ms or more.

Another possible network energy saving solution is to reduce energy consumption of a network device by semi-statically or dynamically turning off cells. FIG. 2 is a schematic diagram of an energy saving solution by semi-statically or dynamically turning off a cell provided by the related art. As shown in FIG. 2, two access nodes (such as base stations or cells) and one UE are included, where access node 1 can be an access node in an off/deactivated/energy saving state, and access node 2 can be an access node in an on/activated/normal state. The access node 2 can indicate that access node 1 is in an off state, thereby reducing energy consumption of a network device of the access node 1. The access node 1 transmits an on-demand discovery reference signal (DRS) or a downlink public signal. At this time, the on-demand DRS or downlink public signal can be triggered by a neighboring cell, a macro cell, or a primary cell (PCell). The on-demand DRS or downlink public signal facilitates finding cells that are in an off/deactivated/energy saving state.

However, both of the above network energy saving solutions have some problems.

### (1) Possible problems of increasing the transmission period of public signals (such as SSB).

Configuring a long-period (such as 32 radio frames) SSB can reduce network power consumption, but the long-period SSB makes it impossible for the UE to synchronize well with a base station. When a transmission period of the long-period SSB exceeds 160 ms, the UE needs to re-perform automatic gain control (AGC) and then performs synchronization. At this time, SSB burst in each long period cannot meet the requirements of the UE for completing the AGC and the synchronization, thereby affecting performance of the UE.

It is assumed that a cell is in the off state and the base station configures a long-period SSB. Since the long-period SSB cannot synchronize the UE and the base station well, a transition delay from the off state to the on state of the cell is increased. At this time, when the cell enters the on state, the UE still needs to be synchronized through the SSB, and the UE cannot enter a data transmission state as soon as possible.

### (2) Possible problems of downlink public signals (such as SSB) triggered on demand.

Triggering the SSB on demand can reduce network power consumption. At this time, the SSB can be triggered on demand by a neighboring cell/a macro cell/a PCell. When the SSB is not triggered, downlink synchronization between the UE and the base station is affected due to lack of the SSB to calibrate a downlink frequency error, thereby affecting the performance of the UE.

In response to the above problems, embodiments of the present application provide a solution, by transmitting a first signal in at least one second time domain range included in a first time domain range, a terminal can have more opportunities to receive the first signal in the first time domain range, thereby ensuring good synchronization between the terminal and the base station and reducing the power consumption of the network device.

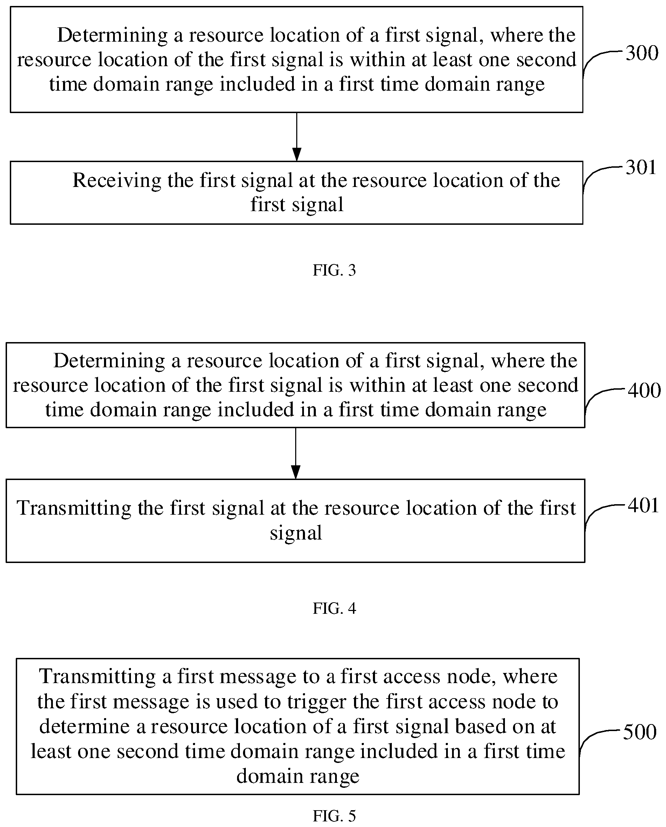

FIG. 3 is a first schematic flowchart of a method for signal transmission according to an embodiment of the present application. The method is performed by a terminal. As shown in FIG. 3, the method includes the following steps.

Step 300: determining a resource location of a first signal, where the resource location of the first signal is within at least one second time domain range included in a first time domain range.

Step 301: receiving the first signal at the resource location of the first signal.

Specifically, the first time domain range may be a relatively long time domain range, and a time unit of the first time domain range may be a superframe, a frame, a second, a millisecond, a subframe, a slot or an orthogonal frequency division multiplexing (OFDM) symbol, etc.

The second time domain range may be a relatively short time domain range, and the time unit of the second time domain range may be a frame, a second, a millisecond, a subframe, a slot or an OFDM symbol, etc. A time length of the second time domain range is less than a time length of the first time domain range.

Optionally, from a perspective of the time domain, time lengths of multiple different first time domain ranges may be equal or unequal, and time lengths of multiple different second time domain ranges may be equal or unequal.

Optionally, the first time domain range may also be referred to as a first period, and the second time domain range may also be referred to as a second period. That is, the first time domain range may be equivalent to a longer signal transmission period, and the second time domain range may be equivalent to a shorter signal transmission period.

In the embodiment of the present application, at least one second time domain range is within the first time domain range. The terminal may determine the resource location of the first signal within at least one second time domain range included in the first time domain range, and receive the first signal based on the determined resource location of the first signal.

Optionally, the resource location described in each embodiment of the present application may be a time domain resource location or a time-frequency domain resource location.

Optionally, the first signal may be used for one or more of synchronization, cell discovery, or measurement. For example, the first signal may be one or more of the following: a DRS, an SSB, a primary synchronization signal (PSS), a secondary synchronization signal (SSS), a master information block (MIB), a channel state indicator reference signal (CSI-RS), a tracking reference signal (TRS), a positioning reference signal (PRS), other downlink signals or newly designed downlink signals, etc.

It should be noted that the method flow applicable to the first signal in each embodiment of the present application may also be applicable to a first channel, which will not be repeated in the following. For example, the terminal may determine a resource location of the first channel, where the resource location of the first channel is within at least one second time domain range included in the first time domain range; and receive the first channel at the resource location of the first channel.

Optionally, the first channel may be downlink control information (DCI), a system message block, a paging message, other downlink channels or newly designed downlink channels, etc.

Optionally, a characteristic of the second time domain range may include one or more of the following.
(1) The time length of each second time domain range is equal.
(2) The at least one second time domain range is multiple consecutive second time domain ranges within the first time domain range.
(3) The first time domain range includes N second time domain ranges, where N is an integer greater than M, and M is a quantity of the at least one second time domain range. N and M have the same meaning in each embodiment of the present application, and will not be repeated hereafter. In some embodiments, M may be 3.

Optionally, the first time domain range may include N second time domain ranges and a first duration. The length of the first duration may be equal to 0 (that is, the time length of the first time domain range is N times of the time length of the second time domain range), or the length of the first duration may be greater than 0 and less than the time length of one second time domain range.

In the method for signal transmission provided by the embodiment of the present application, at least one second time domain range is within the first time domain range. The terminal may determine the resource location of the first signal within at least one second time domain range included in the first time domain range, and receive the first signal at the determined resource location of the first signal, thereby increasing an opportunity for the terminal to receive the first signal, ensuring good synchronization between the terminal and the first access node, and reducing power consumption of a network device.

Optionally, determining the resource location of the first signal includes:
determining M second time domain ranges within the first time domain range, where M is a quantity of the at least one second time domain range; and
determining the resource location of the first signal based on the M second time domain ranges.

Specifically, the terminal can first determine M second time domain ranges in the first time domain range, where the M second time domain ranges refer to the above-mentioned "at least one second time domain range". After determining the M second time domain ranges, the terminal may determine the resource location of the first signal based on the M second time domain ranges. A sum of time lengths of the M second time domain ranges is less than the time length of the first time domain range.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Specifically, the terminal may determine M second time domain ranges within the first time domain range in a variety of different ways.

In some embodiments, the terminal may determine the first M consecutive second time domain ranges among the N second time domain ranges included in the first time domain range as the M second time domain ranges.

In some embodiments, the terminal may determine the M second time domain ranges based on the starting position of the M consecutive second time domain ranges indicated by the first parameter in the first time domain range.

For example, the first parameter may indicate that which second time domain range the first second time domain range among the M second time domain ranges is among the N second time domain ranges included in the first time domain range.

For example, the first parameter may indicate an offset value of the starting position of the first second time domain range among the M second time domain ranges relative to a starting position of the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Specifically, the terminal may determine the resource location of the first signal based on the M second time domain ranges in two different ways.

In some embodiments, the terminal may determine the resource location of the first signal set in each second time domain range among the M second time domain ranges. The first signal set may be understood as a first signal burst, and the first signal set includes first signals in multiple beam directions. For example, the first signal set may include multiple first signals that complete one beam scan.

In some embodiments, the terminal may determine the resource location of the first signal in one beam direction in each second time domain range among the M second time domain ranges, and beam directions of the first signal in any two neighboring second time domain ranges may be different.

It should be noted that within the second time domain range, the first signal set or the first signal being specifically transmitted or received at which resource location can be determined based on the related art, and will not be repeated here. The first channel, the second signal, and the third signal described in each embodiment of the present application are similar, and will not be repeated here.

Optionally, before determining the resource location of the first signal based on the M second time domain ranges, the method further includes:
determining a resource location of a second signal based on the resource location of the first signal determined within the first time domain range, where the second signal is used to trigger a first access node to determine the resource location of the first signal based on the M second time domain ranges; and
transmitting the second signal to the first access node based on the determined resource location of the second signal.

Specifically, the first access node can be a network device (such as a base station), a cell, a carrier, etc. In each embodiment of the present application, there is no limitation on the specific name or existence form of the first access node.

Optionally, the first access node can be in an off state, a deactivated state, or an energy saving state.

In the embodiment of the present application, the first access node determines the resource location of the first signal based on the M second time domain ranges, and transmits the first signal at the determined resource location, which may be triggered by the terminal or other access nodes. The terminal may trigger the first access node to determine the resource location of the first signal based on the M second time domain ranges by transmitting the second signal. It can be understood that in this case, before being triggered, the first access node determines the resource location of the first signal based on the first time domain range and transmits the first signal. At this time, the transmission period of the first signal is relatively long. For example, only the first signal of multiple beam directions that complete one beam scan is transmitted within the first time domain range, or only the first signal in one beam direction is transmitted once within the first time domain range.

The terminal may first determine the resource location of the first signal based on the first time domain range, and then determine the resource location of the second signal based on the determined resource location of the first signal. For example, starting or ending resource location of the second signal may be offset by offset1 time units relative to the determined resource location of the first signal. The time unit may be a superframe, a frame, a second, a millisecond, a subframe, a slot or an OFDM symbol, etc. The value of offset1 may be pre-agreed or indicated by a network device (such as a first access node or a second access node).

After determining the resource location of the second signal, the terminal may transmit the second signal to the first access node to trigger the first access node to determine the resource location of the first signal based on the M second time domain ranges. Optionally, the second signal may be an uplink wake-up signal (WUS), a sounding reference signal (SRS), other uplink signals, uplink channels or newly designed uplink signals.

Optionally, the second signal may further carry parameter information for adjusting a time length of the first time domain range and/or a time length of the second time domain range.

Optionally, the parameter information may include the time length of the adjusted first time domain range and/or a time length of an adjusted second time domain range, or a proportional factor for determining the time length of the adjusted first time domain range and/or a time length of an adjusted second time domain range. For example, the proportional factor may be a ratio of the time length of the adjusted first time domain range to the time length of the first time domain range before adjustment.

Taking the adjustment of the first time domain range as an example, the parameter information may be a possible value of the first time domain range, or the parameter information may be a proportional factor of the time length of the adjusted first time domain range relative to the time length of the first time domain range before adjustment, where the time length of the first time domain range is adjusted or shortened by the proportional factor, and the proportional factor may be less than or equal to 1.

Optionally, after determining the resource location of the first signal based on the M second time domain ranges, the method further includes:
determining a resource location of a third signal based on a resource location of the first signal determined within a specified second time domain range, where the third signal is used to trigger a state transition of a first access node; and
transmitting the third signal to the first access node based on the determined resource location of the third signal.

Specifically, after determining the resource location of the first signal based on the M second time domain ranges, or after the terminal receives the first signal, the terminal may transmit the third signal to the first access node when needed, such as when the terminal has uplink data to transmit or performance of the terminal is affected, where the third signal is used to trigger the state transition of the first access node.

Optionally, the state transition of the first access node may include a transition from an off state to an on state, a transition from a deactivated state to an activated state, or a transition from an energy saving state to a normal state, etc.

Optionally, the state of the first access node being an on state, an activated state or a normal state may be that the first access node transmits the first signal in a shorter period, for example, transmitting the SSB in a period of 20 ms.

Optionally, the third signal may be an uplink WUS, an SRS, other uplink signals, uplink channels or newly designed uplink signals, etc.

Before transmitting the third signal, the terminal may first determine the resource location of the third signal based on the resource location of the first signal determined within the specified second time domain range. For example, the starting or ending resource location of the third signal may be offset by offset2 time units relative to the resource location of the first signal determined within the specified second time domain range, and the time unit may be a superframe, a frame, a second, a millisecond, a subframe, a slot or an OFDM symbol, etc. The value of offset2 may be pre-agreed or indicated by a network device (such as the first access node or the second access node, etc.).

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Specifically, the above-mentioned specified second time domain range can be a certain second time domain range among the M second time domain ranges, and the terminal may determine the resource location of the third signal based on the resource location of the first signal determined within the specified second time domain range.

In some embodiments, the specified second time domain range can be determined based on the second parameter. The second parameter indicates that which second time domain range the specified second time domain range is among the M second time domain ranges.

In some embodiments, the specified second time domain range can be determined based on the third parameter. The third parameter indicates that which second time domain range the specified second time domain range is among the N second time domain ranges included in the first time domain range.

Optionally, the third signal may further carry parameter information for adjusting a time length of the first time domain range and/or a time length of the second time domain range.

Optionally, the parameter information may include the time length of the adjusted first time domain range and/or a time length of an adjusted second time domain range, or a proportional factor for determining the time length of the adjusted first time domain range and/or a time length of an adjusted second time domain range. For example, the proportional factor may be a ratio of the time length of the adjusted first time domain range to the time length of the first time domain range before adjustment.

Taking the adjustment of the first time domain range as an example, the parameter information may be a possible value of the first time domain range, or the parameter information may be a proportional factor of the time length of the adjusted first time domain range relative to the time length of the first time domain range before adjustment, where the time length of the first time domain range is adjusted or shortened by the proportional factor, and the proportional factor may be less than or equal to 1.

FIG. 4 is a second schematic flowchart of a method for signal transmission according to an embodiment of the present application. The method is performed by a first access node. As shown in FIG. 4, the method includes the following steps.

Step 400: determining a resource location of a first signal, where the resource location of the first signal is within at least one second time domain range included in a first time domain range.

Step 401: transmitting the first signal at the resource location of the first signal.

Specifically, the first access node may be a network device (such as a base station), a cell, a carrier, etc. In each embodiment of the present application, there is no limitation on the specific name or existence form of the first access node.

Optionally, the first access node may be in an off state, a deactivated state, or an energy saving state.

The first time domain range may be a relatively long time domain range, and a time unit of the first time domain range may be a superframe, a frame, a second, a millisecond, a subframe, a slot or an OFDM symbol, etc.

The second time domain range may be a relatively short time domain range, and the time unit of the second time domain range may be a frame, a second, a millisecond, a subframe, a slot or an OFDM symbol, etc. A time length of the second time domain range is less than a time length of the first time domain range.

Optionally, from a perspective of the time domain, time lengths of multiple different first time domain ranges may be equal or unequal, and time lengths of multiple different second time domain ranges may be equal or unequal.

Optionally, the first time domain range may also be referred to as a first period, and the second time domain range may also be referred to as a second period. That is, the first time domain range may be equivalent to a longer signal transmission period, and the second time domain range may be equivalent to a shorter signal transmission period.

In the embodiment of the present application, at least one second time domain range is within the first time domain range. The first access node may determine the resource location of the first signal within at least one second time domain range included in the first time domain range, and transmit the first signal based on the determined resource location of the first signal.

Optionally, the resource location described in each embodiment of the present application may be a time domain resource location or a time-frequency domain resource location.

Optionally, the first signal may be used for one or more of synchronization, cell discovery, or measurement. For example, the first signal may be one or more of the following: a DRS, an SSB, a PSS, an SSS, an MIB, a CSI-RS, a TRS, a PRS, other downlink signals or newly designed downlink signals, etc.

It should be noted that the method flow applicable to the first signal in each embodiment of the present application may also be applicable to a first channel, which will not be repeated in the following. For example, the first access node may determine the resource location of the first channel, where the resource location of the first channel is within at least one second time domain range included in the first time domain range; and transmit the first channel at the resource location of the first channel.

Optionally, the first channel may be a DCI, a system message block, a paging message, other downlink channels or a newly designed downlink channel, etc.

Optionally, a characteristic of the second time domain range may include one or more of the following.
(1) The time length of each second time domain range is equal.
(2) The at least one second time domain range is multiple consecutive second time domain ranges within the first time domain range.
(3) The first time domain range includes N second time domain ranges, where N is an integer greater than M, and M is a quantity of at least one second time domain range. In some embodiments, M may be 3.

Optionally, the first time domain range may include N second time domain ranges and a first duration. The length of the first duration may be equal to 0 (that is, the time length of the first time domain range is N times of the time length of the second time domain range), or the length of the first duration may be greater than 0 and less than the time length of one second time domain range.

In the method for signal transmission provided by the embodiment of the present application, at least one second time domain range is within the first time domain range. The first access node may determine the resource location of the first signal within at least one second time domain range included in the first time domain range, and transmit the first signal at the determined resource location of the first signal, thereby increasing an opportunity for the terminal to receive the first signal, ensuring good synchronization between the terminal and the first access node, and reducing the power consumption of the network device.

Optionally, determining the resource location of the first signal includes:
determining M second time domain ranges within the first time domain range, where M is a quantity of the at least one second time domain range; and
determining the resource location of the first signal based on the M second time domain ranges.

Specifically, the first access node can first determine M second time domain ranges in the first time domain range, where the M second time domain ranges refer to the above-mentioned "at least one second time domain range". After determining the M second time domain ranges, the first access node may determine the resource location of the first signal based on the M second time domain ranges. A sum of time lengths of the M second time domain ranges is less than the time length of the first time domain range.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Specifically, the first access node may determine M second time domain ranges within the first time domain range in a variety of different ways.

In some embodiments, the first access node may determine the first M consecutive second time domain ranges among the N second time domain ranges included in the first time domain range as the M second time domain ranges.

In some embodiments, the first access node may determine the M second time domain ranges based on the starting position of the M consecutive second time domain ranges indicated by the first parameter in the first time domain range.

For example, the first parameter may indicate that which second time domain range the first second time domain range among the M second time domain ranges is among the N second time domain ranges included in the first time domain range.

For example, the first parameter may indicate an offset value of the starting position of the first second time domain range among the M second time domain ranges relative to a starting position of the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Specifically, the first access node may determine the resource location of the first signal based on the M second time domain ranges in two different ways.

In some embodiments, the first access node may determine the resource location of the first signal set in each second time domain range among the M second time domain ranges. The first signal set may be understood as a first signal burst, and the first signal set includes first signals in multiple beam directions. For example, the first signal set may include multiple first signals that complete one beam scan.

In some embodiments, the first access node may determine the resource location of the first signal in one beam direction in each second time domain range among the M second time domain ranges, and beam directions of the first signal in any two neighboring second time domain ranges may be different.

Optionally, before determining the resource location of the first signal based on the M second time domain ranges, the method further includes:
receiving a first message transmitted from a terminal or a second access node, where the first message is used to trigger the first access node to determine the resource location of the first signal based on the M second time domain ranges.

Specifically, in the embodiment of the present application, the first access node determines the resource location of the first signal based on the M second time domain ranges, and transmits the first signal at the determined resource location, which may be triggered by the terminal or the second access node (a neighboring cell of the first access node, or a macro cell, or a PCell, or another access node, etc.). The terminal or the second access node may transmit the first message to the first access node, and the first message may be used to trigger the first access node to determine the resource location of the first signal based on the M second time domain ranges. It can be understood that in this case, before being triggered, the first access node determines the resource location of the first signal based on the first time domain range and transmits the first signal. At this time, the transmission period of the first signal is relatively long. For example, only the first signal of multiple beam directions that complete one beam scan is transmitted within the first time domain range, or only the first signal in one beam direction is transmitted once within the first time domain range.

Optionally, the first message can be a second signal or an uplink channel (such as a physical uplink control channel (PUCCH), a physical uplink shared channel (PUSCH), etc.) transmitted from the terminal, or can be signaling transmitted from the second access node.

Optionally, receiving the first message transmitted from the terminal includes:
determining a resource location of a second signal based on the resource location of the first signal determined within the first time domain range, where the second signal is used to trigger the first access node to determine the resource location of the first signal based on the M second time domain ranges; and
receiving the second signal transmitted from the terminal based on the determined resource location of the second signal.

Specifically, when the terminal triggers the first access node to determine the resource location of the first signal based on the M second time domain ranges through the second signal, the first access node may first determine the resource location of the first signal based on the first time domain range, and then determine the resource location of the second signal based on the determined resource location of the first signal. For example, starting or ending resource location of the second signal may be offset by offset1 time units relative to the determined resource location of the first signal. The time unit may be a superframe, a frame, a second, a millisecond, a subframe, a slot or an OFDM symbol, etc. The value of offset1 may be pre-agreed or indicated by a network device (such as a first access node or a second access node).

After determining the resource location of the second signal, the first access node can detect the second signal transmitted from the terminal based on the determined resource location of the second signal. Optionally, the second signal may be a WUS, an SRS, other uplink signals, uplink channels or newly designed uplink signals, etc.

Optionally, the first message may also carry parameter information for adjusting a time length of the first time domain range and/or a time length of the second time domain range.

Optionally, the parameter information may include the time length of the adjusted first time domain range and/or a time length of an adjusted second time domain range, or a proportional factor for determining the time length of the adjusted first time domain range and/or a time length of an adjusted second time domain range. For example, the proportional factor may be a ratio of the time length of the adjusted first time domain range to the time length of the first time domain range before adjustment.

Taking the adjustment of the first time domain range as an example, the parameter information may be a possible value of the first time domain range, or the parameter information may be a proportional factor of the time length of the adjusted first time domain range relative to the time length of the first time domain range before adjustment, where the time length of the first time domain range is adjusted or shortened by the proportional factor, and the proportional factor may be less than or equal to 1.

Optionally, after determining the resource location of the first signal based on the M second time domain ranges, the method further includes:
determining a resource location of a third signal based on a resource location of the first signal determined within a specified second time domain range, where the third signal is used to trigger a state transition of the first access node; and
receiving the third signal based on the determined resource location of the third signal.

Specifically, after determining the resource location of the first signal based on the M second time domain ranges, or after transmitting the first signal, the first access node may determine the resource location of the third signal based on the resource location of the first signal determined within the specified second time domain range. The third signal is used to trigger the state transition of the first access node. In case that the first access node detects the third signal, the state transition of the first access node is triggered based on the third signal.

Optionally, the state transition of the first access node may include a transition from an off state to an on state, a transition from a deactivated state to an activated state, or a transition from an energy saving state to a normal state, etc.

Optionally, the state of the first access node being an on state, an activated state or a normal state may be that the first access node transmits the first signal in a shorter period, for example, transmitting the SSB in a period of 20 ms.

Optionally, the third signal may be an uplink WUS, an SRS, other uplink signals, uplink channels or newly designed uplink signals, etc.

Before receiving the third signal, the first access node may first determine the resource location of the third signal based on the resource location of the first signal determined within the specified second time domain range. For example, the starting or ending resource location of the third signal may be offset by offset2 time units relative to the resource location of the first signal determined within the specified second time domain range, and the time unit may be a superframe, a frame, a second, a millisecond, a subframe, a slot or an OFDM symbol, etc. The value of offset2 may be pre-agreed or indicated by a network device (such as the first access node or the second access node, etc.).

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Specifically, the above-mentioned specified second time domain range may be a certain second time domain range among the M second time domain ranges, and the first access node may determine the resource location of the third signal based on the resource location of the first signal determined within the specified second time domain range.

In some embodiments, the specified second time domain range can be determined based on the second parameter. The second parameter indicates that which second time domain range the specified second time domain range is among the M second time domain ranges.

In some embodiments, the specified second time domain range can be determined based on the third parameter. The third parameter indicates that which second time domain range the specified second time domain range is among the N second time domain ranges included in the first time domain range.

Optionally, the third signal may further carry parameter information for adjusting a time length of the first time domain range and/or a time length of the second time domain range.

Optionally, the parameter information may include the time length of the adjusted first time domain range and/or a time length of an adjusted second time domain range, or a proportional factor for determining the time length of the adjusted first time domain range and/or a time length of an adjusted second time domain range. For example, the proportional factor may be a ratio of the time length of the adjusted first time domain range to the time length of the first time domain range before adjustment.

Taking the adjustment of the first time domain range as an example, the parameter information may be a possible value of the first time domain range, or the parameter information may be a proportional factor of the time length of the adjusted first time domain range relative to the time length of the first time domain range before adjustment, where the time length of the first time domain range is adjusted or shortened by the proportional factor, and the proportional factor may be less than or equal to 1.

Optionally, the method further includes:
transmitting parameter indication information to a terminal and/or a second access node, where the parameter indication information is used to indicate one or more of the following:
a time length of the first time domain range, a time length of the second time domain range, a value of M, a value of N, a value of a first parameter, a value of a second parameter, or a value of a third parameter.

Specifically, various parameter values described in the embodiments of the present application, such as the time length of the first time domain range, the time length of the second time domain range, the value of M, the value of N, the value of the first parameter, the value of the second parameter, the value of the third parameter, etc., can be indicated by the first access node to the terminal and/or the second access node. Optionally, the second access node can also indicate the above parameters (such as the time length of the first time domain range, the time length of the second time domain range, the value of M, the value of N, the value of the first parameter, the value of the second parameter, the value of the third parameter, etc.) to the terminal.

FIG. 5 is a third schematic flowchart of a method for signal transmission according to an embodiment of the present application. The method is performed by a second access node. As shown in FIG. 5, the method includes the following steps.

Step 500: transmitting a first message to a first access node, where the first message is used to trigger the first access node to determine a resource location of a first signal based on at least one second time domain range included in a first time domain range.

Specifically, the first access node can be a network device (such as a base station), a cell, a carrier, etc. In each embodiment of the present application, there is no limitation on the specific name or existence form of the first access node.

The second access node may be a neighboring cell of the first access node, or a macro cell, or a PCell, or another access node, etc., which is not limited here.

The first time domain range may be a relatively long time domain range, and a time unit of the first time domain range may be a superframe, a frame, a second, a millisecond, a subframe, a slot or an OFDM symbol, etc.

The second time domain range may be a relatively short time domain range, and the time unit of the second time domain range may be a frame, a second, a millisecond, a subframe, a slot or an OFDM symbol, etc. A time length of the second time domain range is less than a time length of the first time domain range.

Optionally, the first time domain range may also be referred to as a first period, and the second time domain range may also be referred to as a second period. That is, the first time domain range may be equivalent to a longer signal transmission period, and the second time domain range may be equivalent to a shorter signal transmission period.

Optionally, the resource location described in each embodiment of the present application may be a time domain resource location or a time-frequency domain resource location.

Optionally, the first signal may be used for one or more of synchronization, cell discovery, or measurement. For example, the first signal may be one or more of the following: a DRS, an SSB, a PSS, an SSS, an MIB, a CSI-RS, a TRS, a PRS, other downlink signals or newly designed downlink signals, etc.

Optionally, a characteristic of the second time domain range may include one or more of the following.
(1) The time length of each second time domain range is equal.
(2) The at least one second time domain range is multiple consecutive second time domain ranges within the first time domain range.
(3) The first time domain range includes N second time domain ranges, where N is an integer greater than M, and M is a quantity of at least one second time domain range. In some embodiments, M may be 3.

Optionally, the first time domain range may include N second time domain ranges and a first duration. The length of the first duration may be equal to 0 (that is, the time length of the first time domain range is N times of the time length of the second time domain range), or the length of the first duration may be greater than 0 and less than the time length of one second time domain range.

In the embodiment of the present application, the first access node determines the resource location of the first signal based on the M second time domain ranges, and transmits the first signal at the determined resource location, which may be triggered by the terminal or the second access node. The terminal or the second access node may transmit the first message to the first access node, and the first message may be used to trigger the first access node to determine the resource location of the first signal based on the M second time domain ranges. It can be understood that in this case, before being triggered, the first access node determines the resource location of the first signal based on the first time domain range and transmits the first signal. At this time, the transmission period of the first signal is relatively long. For example, only the first signal of multiple beam directions that complete one beam scan is transmitted within the first time domain range, or only the first signal in one beam direction is transmitted once within the first time domain range.

Optionally, the first message may also carry parameter information for adjusting a time length of the first time domain range and/or a time length of the second time domain range.

Optionally, the parameter information may include the time length of the adjusted first time domain range and/or a time length of an adjusted second time domain range, or a proportional factor for determining the time length of the adjusted first time domain range and/or a time length of an adjusted second time domain range. For example, the proportional factor may be a ratio of the time length of the adjusted first time domain range to the time length of the first time domain range before adjustment.

Taking the adjustment of the first time domain range as an example, the parameter information may be a possible value of the first time domain range, or the parameter information may be a proportional factor of the time length of the adjusted first time domain range relative to the time length of the first time domain range before adjustment, where the time length of the first time domain range is adjusted or shortened by the proportional factor, and the proportional factor may be less than or equal to 1.

In the method for signal transmission provided by the embodiment of the present application, the second access node may transmit the first message to the first access node to trigger the first access node to determine the resource location of the first signal based on the at least one second time domain range. By triggering on demand, flexibility of the first access node in transmitting the first signal may be improved, and power consumption of the network device may be reduced.

The methods provided by the embodiments of the present application are based on the same application concept, the implementation of each method can refer to each other, and the repetition will not be repeated.

The following examples of the methods provided by the above embodiments of the present application are illustrated by embodiments of specific application scenarios.

### Embodiment 1:

### First access node side:

Step 1: a first access node determines a resource location of a first signal, where the resource location of the first signal is within at least one second time domain range included in the first time domain range.

Step 2: the first access node transmits the first signal at the resource location of the first signal.

In this embodiment, the first access node can be a first network device, a first cell, or a first carrier. This embodiment does not limit the specific name or existence form of the first access node. The first signal can be a downlink signal, which can specifically be at least one of a DRS, an SSB, a PSS, an SSS, an MIB, a CSI-RS, a TRS, a PRS, other downlink signals, or newly designed downlink signals. The first channel can be at least one of DCI, a system message block, a paging message, other downlink channels, or newly designed downlink channels. In this embodiment, the first access node is preferred to determine the resource location of the first signal, and the first signal is preferably a DRS or an SSB. Determining the resource location of the SSB is taken as an example in the following part.

The first time domain range is a relatively long time domain range, and a time unit of the first time domain range can be a superframe, a frame, a second, a millisecond, a subframe, a slot or an OFDM symbol, etc. The second time domain range can be a relatively short time domain range, and a time unit of the second time domain range can be a frame, a second, a millisecond, a subframe, a slot or an OFDM symbol, etc. A length of the first time domain range is longer than a length of the second time domain range, and the first time domain range may include N second time domain ranges, where N is a positive integer. Preferably, the length of the first time domain range is an integer multiple of the length of the second time domain range, such as, the integer multiple is N.

The first access node determines the resource location of SSB based on at least one second time domain range included in the first time domain range. Specifically, the first access node transmits the SSB in M second time domain ranges included in the first time domain range, where M<N. It is preferably that M=3, and the M second time domain ranges are M consecutive second time domain ranges. The M consecutive second time domain ranges are durations of the SSB transmitted from the first access node within the second time domain range in the first time domain range.

At this time, the M second time domain ranges can be agreed to be first M second time domain ranges in the N second time domain ranges, or the first access node determines a starting position of the M second time domain ranges in the N second time domain ranges through a first parameter X1. For example, the first access node determines the first second time domain range among the M second time domain ranges as a X1-th second time domain range in the N second time domain ranges in the first time domain range, and configures the starting position X1 to the terminal, so that the terminal can know a position of the M second time domain ranges in the N second time domain ranges included in the first time domain range. The first access node can also determine the starting position of the M second time domain ranges in the N second time domain ranges by indicating an offset value through the first parameter. The first parameter can indicate an offset value of the starting position of the first second time domain range among the M second time domain ranges relative to the starting position of the first time domain range.

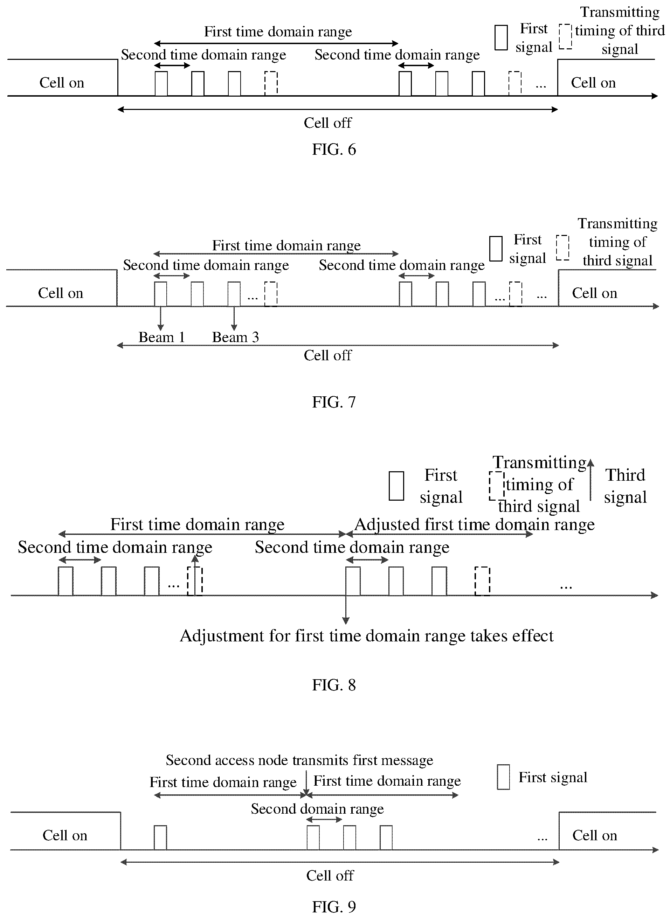

FIG. 6 is a first schematic diagram of a first access node transmitting a first signal according to an embodiment of the present application. A first access node transmitting a first signal when the first access node is in a cell-off state is taken as an example for illustration.

As shown in FIG. 6, a solid rectangle represents the first signal, and an SSB is taken as an example in this embodiment. The first access node transmits the SSB in M second time domain ranges within a first time domain range, and the first access node transmits one SSB in each second time domain range. The SSB here can be one SSB burst, and the SSB burst includes SSBs of multiple beams that complete one beam scan. That is, the first access node completes transmission of SSB of multiple beams in each second time domain range among the M second time domain ranges.

As shown in FIG. 6, a dotted rectangle represents transmitting timing of a third signal. After the first access node determines a resource location of the SSB based on at least one second time domain range included in the first time domain range, it can also determine a resource location of the third signal based on the resource location of the SSB. Preferably, the third signal is an uplink signal transmitted from the terminal, and the uplink signal can be at least one of an uplink WUS, an SRS, other uplink signals, or a newly designed uplink signal.

The resource location of the third signal can be determined in the following two ways.

The first way: the resource location of the third signal is determined based on a second parameter Y1. The first access node determines the resource location of the third signal based on the position of the SSB included in a Y1-th second time domain range among the M second time domain ranges, where Y1 is less than or equal to M, preferably Y1=M. Starting and ending resource locations of the third signal are offset by offset2 time units relative to the position of the SSB, where the time unit may be a superframe, a frame, a second, a millisecond, a subframe, a slot or an OFDM symbol.

The second way: the resource location of the third signal is determined based on a third parameter Y2. The first access node determines the resource location of the third signal based on the position of the SSB included in a Y2-th second time domain range among the N second time domain ranges included in the first time domain range, where Y2 is less than or equal to N. Starting and ending resource locations of the third signal are offset by offset2 time units relative to the position of the SSB in the Y2-th second time domain range, where the time unit may be a superframe, a frame, a second, a millisecond, a subframe, a slot or an OFDM symbol.

The resource location of the third signal is used for the terminal to transmit the third signal at the resource location of the third signal when there is uplink data in the terminal or the performance of the terminal is affected. That is, although the first access node determines the resource location of the third signal, at this time, the first access node needs to detect the third signal at a resource location of each third signal. However, the terminal does not necessarily transmit the third signal at the resource location of the third signal. The terminal will only transmit the third signal at the resource location of the third signal when necessary. The third signal is used to trigger the first access node to change from an off/deactivated/energy saving state to an on/activated/normal state.

Terminal side (the method for determining the resource location of the first channel/first signal on the terminal side is similar to that on the first access node side, and the repetition will not be repeated later):

Step 1: a terminal determines the resource location of a first signal, where the resource location of the first signal is within at least one second time domain range included in the first time domain range.

Step 2: the terminal receives the first signal at the resource location of the first signal.

In this embodiment, the first signal can be a downlink signal, which can specifically be at least one of a DRS, an SSB, a PSS, an SSS, an MIB, a CSI-RS, a TRS, a PRS, other downlink signals, or newly designed downlink signals. The first channel can be at least one of DCI, a system message block, a paging message, other downlink channels, or newly designed downlink channels. In this embodiment, the terminal is preferred to determine the resource location of the first signal, and the first signal is preferably a DRS or an SSB. Determining the resource location of the SSB is taken as an example in the following part.

The first time domain range is a relatively long time domain range, and the second time domain range is a relatively short time domain range. The first time domain range can be a relatively long time domain range, and a time unit of the first time domain range can be a superframe, a frame, a second, a millisecond, a subframe, a slot or an OFDM symbol, etc. The second time domain range can be a relatively short time domain range, and a time unit of the second time domain range can be a frame, a second, a millisecond, a subframe, a slot or an OFDM symbol, etc. A length of the first time domain range is longer than a length of the second time domain range, and the first time domain range may include N second time domain ranges, where N is a positive integer. Preferably, the length of the first time domain range is an integer multiple of the length of the second time domain range, such as, the integer multiple is N.

The terminal determines the resource location of the SSB based on at least one second time domain range included in the first time domain range. Specifically, the terminal receives the SSB in the M second time domain ranges included in the first time domain range, where M<N. It is preferably that M=3, and the M second time domain ranges are M consecutive second time domain ranges.

At this time, the M second time domain ranges can be agreed to be first M second time domain ranges in the N second time domain ranges, or the terminal determines a starting position of the M second time domain ranges in the N second time domain ranges through a first parameter X1.

The terminal can receive SSB in the M second time domain ranges within the first time domain range. In the M second time domain ranges, the first access node may transmit an SSB burst in each second time domain range. The SSB burst includes SSBs of multiple beams (beams) that complete one beam scan. That is, the first access node completes transmission of SSB of multiple beams in each second time domain range among the M second time domain ranges.

After the terminal determines the resource location of the SSB based on at least one second time domain range included in the first time domain range, it can also determine the resource location of the third signal based on the resource location of the SSB. Preferably, the third signal is an uplink signal transmitted from the terminal, and the uplink signal can be at least one of an uplink (UL) WUS, an SRS, other uplink signals or newly designed uplink signals.

The resource location of the third signal can be determined in the following two ways.

The first way: the resource location of the third signal is determined based on a second parameter Y1. The terminal determines the resource location of the third signal based on the position of the SSB included in a Y1-th second time domain range among the M second time domain ranges, where Y1 is less than or equal to M, preferably Y1=M. Starting and ending resource locations of the third signal are offset by offset2 time units relative to the position of the SSB, where the time unit may be a superframe, a frame, a second, a millisecond, a subframe, a slot or an OFDM symbol.

The second way: the resource location of the third signal is determined based on a third parameter Y2. The terminal determines the resource location of the third signal based on the position of the SSB included in a Y2-th second time domain range among the N second time domain ranges included in the first time domain range, where Y2 is less than or equal to N. Starting and ending resource locations of the third signal are offset by offset2 time units relative to the position of the SSB in the Y2-th second time domain range, where the time unit may be a superframe, a frame, a second, a millisecond, a subframe, a slot or an OFDM symbol.

The resource location of the third signal is used for the terminal to transmit the third signal at the resource location of the third signal when there is uplink data in the terminal or the performance of the terminal is affected. The terminal does not necessarily transmit the third signal at the resource locations of the third signal. The terminal will only transmit the third signal at the resource location of the third signal when necessary. The third signal is used to trigger the first access node to change from an off/deactivated/energy saving state to an on/activated/normal state.

At least one of the above parameters such as M, N, the first parameter X1, the second parameter Y1, offset2, or the third parameter Y2 is notified to the terminal by the first access node, or it may also be notified to the terminal by the second access node. The terminal determines the resource location of the first signal and/or the third signal through at least one of the parameters such as M, N, the first parameter X1, the second parameter Y1, offset2, or the third parameter Y2 notified by the second access node.

Limitations on the first access node, the first signal, the first channel, the first time domain range, the second time domain range, the third signal and various parameters in the first embodiment are still applicable to the subsequent embodiments, and the repetitive parts in the subsequent embodiments will not be repeated.

### Embodiment 2:

### First access node side:

Step 1: a first access node determines a resource location of a first signal, where the resource location of the first signal is within at least one second time domain range included in the first time domain range.

Step 2: the first access node transmits the first signal at the resource location of the first signal.

FIG. 7 is a second schematic diagram of a first access node transmitting a first signal according to an embodiment of the present application. A first access node transmitting a first signal when the first access node is in a cell-off state, and the first signal being an SSB is taken as an example.

As shown in FIG. 7, a solid rectangle represents the first signal. In this embodiment, taking the SSB as an example, the first access node transmits the SSB in M second time domain ranges within the first time domain range. Specifically, each second time domain range among the M second time domain ranges transmits one SSB of a certain beam direction in an SSB burst, and beam directions of the SSBs transmitted from adjacent different second time domain ranges are different. For example, in a first second time domain range, the SSB is transmitted with beam 1 (beam_1), in a second second time domain range, the SSB is transmitted with beam 2 (beam_2), in an X-th second time domain range, the SSB is transmitted with beam X (beam_X), and in an (X+1)-th second time domain range, the SSB is transmitted with beam X+1 (beam_X+1), and so on. That is, the first access node needs to transmit one beam of SSB among the multiple beams of SSB that complete one beam scan in each second time domain range. At this time, the SSB of a certain beam direction transmitted in a certain second time domain range can be transmitted repeatedly multiple times, which is not limited in this embodiment.

As shown in FIG. 7, a dotted rectangle represents transmitting timing of a third signal. After the first access node determines a resource location of the SSB based on at least one second time domain range included in the first time domain range, it can also determine a resource location of the third signal based on the resource location of the SSB. Preferably, the third signal is an uplink signal transmitted from the terminal, and the uplink signal can be at least one of a UL WUS, an SRS, other uplink signals, or a newly designed uplink signal.

Procedures for the terminal side can refer to the first access node side, which will not be repeated.

### Embodiment 3:

### First access node side:

Step 1: a first access node determines a resource location of a first signal, where the resource location of the first signal is within at least one second time domain range included in the first time domain range.

Step 2: the first access node transmits the first signal at the resource location of the first signal.

In this embodiment, the method for the first access node to determine the resource location of the first channel/first signal based on at least one second time domain range included in the first time domain range is the same as the method of the above embodiments. The method for the first access node to transmit the first channel/first signal at the resource location can refer to embodiment 1 or embodiment 2, which will not be repeated here.

In this embodiment, the first access node determining the resource location of the first signal and transmitting the first signal at the resource location is taken as an example. After the first access node determines the resource location of the first signal based on at least one second time domain range included in the first time domain range, the first access node can also determine the resource location of the third signal based on the resource location of the first signal. Preferably, the third signal is an uplink signal transmitted from the terminal, and the uplink signal can be at least one of a UL WUS, an SRS, other uplink signals or newly designed uplink signals.

The resource location of the third signal can be determined in the following two ways.

The first way: the resource location of the third signal is determined based on a second parameter Y1. The first access node determines the resource location of the third signal based on a position of the first signal included in a Y1-th second time domain range among the M second time domain ranges, where Y1 is less than or equal to M, preferably Y1=M. Starting and ending resource locations of the third signal are offset by offset2 time units relative to the position of the first signal, where the time unit may be a superframe, a frame, a second, a millisecond, a subframe, a slot or an OFDM symbol.

The second way: the resource location of the third signal is determined based on a third parameter Y2. The first access node determines the resource location of the third signal based on the position of the first signal included in a Y2-th second time domain range among the N second time domain ranges included in the first time domain range, where Y2 is less than or equal to N. Starting and ending resource locations of the third signal are offset by offset2 time units relative to the position of the first signal in the Y2-th second time domain range, where the time unit may be a superframe, a frame, a second, a millisecond, a subframe, a slot or an OFDM symbol.

The resource location of the third signal is used for the terminal to transmit the third signal at the resource location of the third signal when there is uplink data in the terminal or the performance of the terminal is affected. That is, although the first access node determines the resource location of the third signal, at this time, the first access node needs to detect the third signal at a resource location of each third signal. However, the terminal does not necessarily transmit the third signal at the resource location of the third signal. The terminal will only transmit the third signal at the resource location of the third signal when necessary.

Optionally, the third signal may carry parameter information for adjusting the length of the first time domain range and/or the length of the second time domain range. In this embodiment, the third signal preferably carries parameter information for adjusting the length of the first time domain range. The parameter information may be a possible value of the adjusted first time domain range, or the parameter information may be a proportional factor of the adjusted first time domain range relative to a current first time domain range. The length of the first time domain range is adjusted or shortened through the proportional factor, where the proportional factor is less than or equal to 1.

Optionally, after detecting the third signal at the resource location of third signal, the first access node may transmit an ACKnowledgment signal (ACK) corresponding to the signal to let the terminal know that the first time domain range has been adjusted.

Alternatively, the first access node does not transmit a confirmation signal. At this time, the terminal uses the adjusted first time domain range to blindly detect the first signal. In case that the terminal does not detect the first signal within R (which can be a preset value, and is not specifically limited) first time domain ranges after adjustment, the terminal still detects the first signal based on the original first time domain range.

Alternatively, it is agreed that effective time of the adjustment of the first time domain range starts after the first time domain range where the resource location of the third signal is currently detected/received ends. FIG. 8 is a schematic diagram of a terminal transmitting a third signal according to an embodiment of the present application. As shown in FIG. 8, the terminal transmits a third signal at a third signal transmitting opportunity in a first time domain range, and effective time of the adjustment is after the first time domain range where the third signal is located ends.

The above methods can all allow the terminal that transmits the third signal to adjust the first time domain range to determine whether the first time domain range is effective and when it is effective.

In addition, for other terminals that do not transmit the third signal to adjust the first time domain range, the first access node and other terminals may determine the resource location of the downlink signal/channel through the resource location of the third signal. The method for determining the resource location of the downlink signal/channel is similar to the method for determining the third signal (for example, the resource location of the third signal is offset by several time units), which will not be repeated. The downlink signal/channel is used to carry possible values of a current first time domain range and/or a second time domain range or index values corresponding to the possible values. The first access node notifies a currently adjusted first time domain range and/or the second time domain range to other terminals by transmitting a downlink signal/channel at the resource location of the downlink signal/channel (display notification method). Alternatively, the currently adjusted first time domain range and/or the second time domain range can be notified to other terminals through the second access node. It is not excluded that the terminal transmitting the third signal also notifies the adjusted first time domain range and/or the second time domain range through the display notification method to obtain an updated time domain range.

The first access node transmits the first signal in the M second time domain ranges included in the adjusted first time domain range. The terminal uses the first signal in the M consecutive second time domain ranges to calibrate a frequency offset and determines that a resource location of one third signal exists after the first signal in the M second time domain range. The terminal can continue to transmit the third signal at the resource location of the third signal to adjust the first time domain range on this basis. After continuous adjustment, the first time domain range can be adjusted to a minimum time domain range of the first signal or the length of the M second time domain ranges, such as 20 ms.

Referring to parameter information for adjusting the time domain range length of the first time domain range and/or the second time domain range carried by the third signal, the candidate value or proportional factor included in the parameter information can be notified to the terminal by the first access node before being in an off or an energy saving state, or notified to the terminal by the second access node (a neighboring cell, a PCell, etc.).

Procedures for the terminal side can refer to the first access node side, which will not be repeated.

### Embodiment 4:

### First access node side:

Step 1: a first access node determines a resource location of a first signal, where the resource location of the first signal is within at least one second time domain range included in the first time domain range.

Step 2: the first access node transmits the first signal at the resource location of the first signal.

In this embodiment, when the first access node enters an off state/deactivated state/energy saving state, the first access node first determines the resource location of the first signal based on the first time domain range. At this time, the first time domain range is a relatively long time domain range, and a time unit of the first time domain range can be a superframe, a frame, a second, a millisecond, a subframe, a slot or an OFDM symbol, etc. The second access node (a neighboring cell, a PCell, etc.) may transmit a first message to the first access node based on a set criteria or mechanism or measurement result, thereby triggering the first access node to determine the resource location of the first signal based on at least one second time domain range included in the first time domain range. The second time domain range can be a relatively short time domain range, and a time unit of the second time domain range can be a frame, a second, a millisecond, a subframe, a slot or an OFDM symbol, etc. A length of the first time domain range is longer than a length of the second time domain range, and the first time domain range may include N second time domain ranges, where N is a positive integer. Preferably, the length of the first time domain range is an integer multiple of the length of the second time domain range, such as, the integer multiple is N.

The first access node transmits the first signal in M second time domain ranges included in the first time domain range based on triggering of the second access node, where M<N. It is preferably that M=3, and the M second time domain ranges are M consecutive second time domain ranges. The M consecutive second time domain ranges are durations of the SSB transmitted from the first access node within the second time domain range in the first time domain range.

FIG. 9 is a third schematic diagram of a first access node transmitting a first signal according to an embodiment of the present application. A first access node transmitting a first signal when the first access node is in a cell-off state, and the first signal being an SSB/DRS is taken as an example.

As shown in FIG. 9, the first access node first transmits the SSB/DRS in the first time domain range. At this time, the first time domain range is relatively long, for example, the first time domain range is 64 radio frames. The terminal may first measure sparse SSB/DRS and report a measurement result to the second access node. The sparse SSB/DRS is conducive to the second access node obtaining channel conditions and trends of the terminal under the first access node in an off/deactivated/energy saving state for a next period. The second access node may transmit a first message to the first access node based on the measurement result reported by the terminal, thereby triggering the first access node to determine the resource location of the SSB/DRS based on at least one second time domain range included in the first time domain range. The first access node transmits the SSB/DRS in the M second time domain ranges in the first time domain range based on the triggering of the second access node.

After determining the resource location of the SSB/DRS, the first access node can also determine the resource location of the third signal based on the resource location of the SSB/DRS. Preferably, the third signal is an uplink signal transmitted from the terminal, and the uplink signal may be at least one of a UL WUS, an SRS, other uplink signals or newly designed uplink signals.

The method for determining the resource location of the third signal is the same as the method in the aforementioned embodiments, and will not be repeated. The resource location of the third signal is used for the terminal to transmit the third signal at the resource location, and the third signal is used to trigger the first access node to change from an off/deactivated/energy saving state to an on/activated/normal state.

Optionally, the third signal may carry parameter information for adjusting the length of the first time domain range and/or the length of the second time domain range. In this embodiment, the third signal preferably carries parameter information for adjusting the length of the first time domain range. The parameter information may be a possible value of the adjusted first time domain range, or the parameter information may be a proportional factor of the adjusted first time domain range relative to a current first time domain range. The length of the first time domain range is adjusted or shortened through the proportional factor, where the proportional factor is less than or equal to 1.

The way of the first access node transmitting the first signal in M second time domain ranges can refer to embodiment 1 or embodiment 2, and will not be repeated here.

Procedures for the terminal side can refer to the first access node side, which will not be repeated.

### Embodiment 5:

### First access node side:

Step 1: a first access node determines a resource location of a first signal, where the resource location of the first signal is within at least one second time domain range included in the first time domain range.

Step 2: the first access node transmits the first signal at the resource location of the first signal.

In this embodiment, when the first access node enters an off state/deactivated state/energy saving state, the first access node first determines the resource location of the first signal based on the first time domain range. At this time, the first time domain range is a relatively long time domain range, and a time unit of the first time domain range can be a superframe, a frame, a second, a millisecond, a subframe, a slot or an OFDM symbol, etc. The terminal may transmit a first message to the first access node based on a set criteria or mechanism or measurement result, thereby triggering the first access node to determine the resource location of the first signal based on at least one second time domain range included in the first time domain range. The second time domain range can be a relatively short time domain range, and a time unit of the second time domain range can be a frame, a second, a millisecond, a subframe, a slot or an OFDM symbol, etc. A length of the first time domain range is longer than a length of the second time domain range, and the first time domain range may include N second time domain ranges, where N is a positive integer. Preferably, the length of the first time domain range is an integer multiple of the length of the second time domain range, such as, the integer multiple is N.

The first access node transmits the first signal in the M second time domain ranges included in the first time domain range based on the triggering of the terminal, where M<N. It is preferably that M=3, and the M second time domain ranges are M consecutive second time domain ranges. The M consecutive second time domain ranges are durations of the SSB transmitted from the first access node within the second time domain range in the first time domain range.

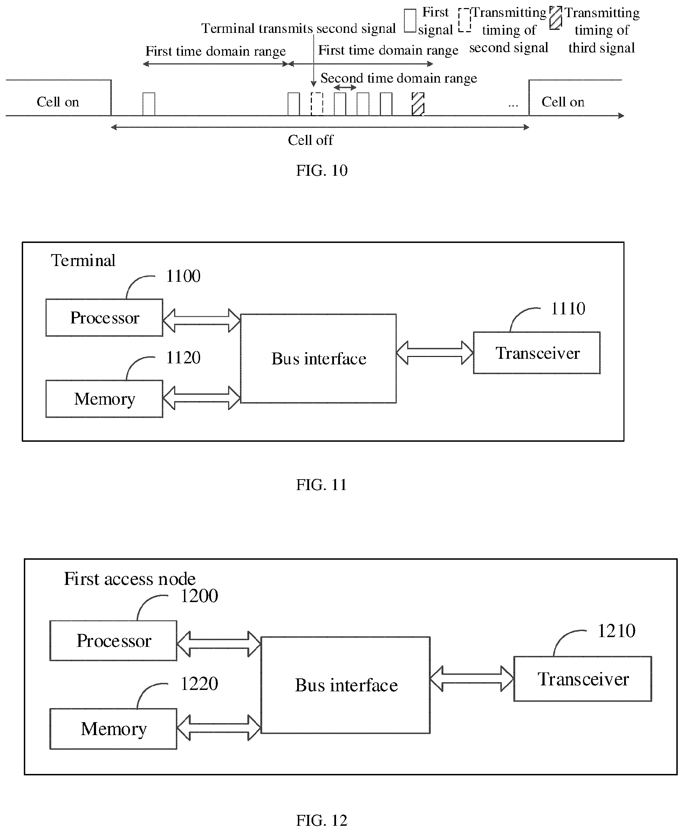

FIG. 10 is a fourth schematic diagram of a first access node transmitting a first signal according to an embodiment of the present application. A first access node transmitting a first signal when the first access node is in a cell-off state, and the first signal being an SSB/DRS is taken as an example.

As shown in FIG. 10, the first access node first transmits the SSB/DRS in the first time domain range. At this time, the first time domain range is relatively long, for example, the first time domain range is 64 radio frames. The terminal can first measure sparse SSB/DRS, where the sparse SSB/DRS is conducive to the terminal determining channel conditions and trends of the terminal under the first access node in an off/deactivated/energy saving state for a next period. The terminal may transmit a first message to the first access node based on the sparse measurement results, thereby triggering the first access node to determine the resource location of the SSB/DRS based on at least one second time domain range included in the first time domain range. The first access node transmits the SSB/DRS in M second time domain ranges in the first time domain range based on the triggering of the terminal.

The first message transmitted from the terminal to the first access node can be a second signal or an uplink channel.

The first access node may determine the resource location of the second signal based on the resource location of the first signal in the first time domain range. Preferably, the second signal is an uplink signal transmitted from the terminal, and the uplink signal can be at least one of a UL WUS, an SRS, other uplink signals, or newly designed uplink signals. As shown in FIG. 10, the second signal is used to trigger the first access node to transmit the first signal (such as an SSB/DRS) in the M second time domain ranges in the first time domain range. After transmitting the first signal in the M second time domain ranges in the first time domain range, the first access node may also determine the resource location of the third signal based on the resource location of the first signal. The third signal can be used to trigger the first access node to change from an off/deactivated/energy saving state to an on/activated/normal state. Preferably, the third signal is an uplink signal transmitted from the terminal, and the uplink signal can be at least one of a UL WUS, an SRS, other uplink signals or newly designed uplink signals.

The resource location of the second signal can be determined in the following way.

The first access node determines the resource location of the second signal based on the position of the first signal (such as an SSB/DRS) included in the first time domain range. A starting/ending resource location of the second signal is offset by offset1 time units relative to the position of the first signal. The time unit can be a superframe, a frame, a second, a millisecond, a subframe, a slot or an OFDM symbol. The resource location of the second signal is used for the terminal to transmit the second signal at the resource location, where the second signal is used to trigger the first access node to transmit the first signal in the M second time domain ranges in the first time domain range.

Optionally, the second signal or the third signal may carry a parameter for adjusting the length of the first time domain range and/or the second time domain range. In this embodiment, the second signal or the third signal preferably carries a parameter for adjusting the length of the first time domain range. The parameter may be a possible value of the adjusted first time domain range, or the parameter may be a proportional factor of the adjusted first time domain range relative to a current first time domain range. The length of the first time domain range is adjusted or shortened through the proportional factor, where the proportional factor is less than or equal to 1.

The way of the first access node transmitting the first signal in M second time domain ranges can refer to embodiment 1 or embodiment 2, and will not be repeated here.

Procedures for the terminal side can refer to the first access node side, which will not be repeated.

The methods and apparatuses provided by each embodiment of the present application are based on the same application concept. Since principles of solving problems by the methods and the apparatuses are similar, implementations of the apparatuses and the methods can refer to each other, and the repeated parts will not be repeated.

FIG. 11 is a schematic structural diagram of a terminal according to an embodiment of the present application. As shown in FIG. 11, the terminal includes a memory 1120, a transceiver 1110 and a processor 1100, where the processor 1100 and the memory 1120 may also be physically arranged separately.

The memory 1120 is used for storing computer programs, and the transceiver 1110 is used for receiving and transmitting data under control of the processor 1100.

Specifically, the transceiver 1110 is used for receiving and transmitting data under the control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1110 may include multiple elements, i.e., including a transmitter and a receiver, units for providing communication with various other devices over transmission media including wireless channels, wired channels, fiber optic cables, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field programmable gate array (FPGA) or a complex programmable logic device (CPLD), and the processor may also adopt a multi-core architecture.

The processor 1100 calls the computer program stored in the memory 1120 to perform any one of the methods provided by the embodiments of the present application according to an obtained executable instruction, for example:
determining a resource location of a first signal, where the resource location of the first signal is within at least one second time domain range included in a first time domain range; and
receiving the first signal at the resource location of the first signal.

Optionally, the first signal is used for one or more of synchronization, cell discovery, or measurement.

Optionally, the method at least includes:
a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the method further includes:
determining a resource location of a second signal based on the resource location of the first signal determined within the first time domain range, where the second signal is used to trigger a first access node to determine the resource location of the first signal based on the M second time domain ranges; and
transmitting the second signal to the first access node based on the determined resource location of the second signal.

Optionally, the second signal further carries parameter information for adjusting a time length of the first time domain range and/or a time length of the second time domain range.

Optionally, after determining the resource location of the first signal based on the M second time domain ranges, the method further includes:
determining a resource location of a third signal based on a resource location of the first signal determined within a specified second time domain range, where the third signal is used to trigger a state transition of a first access node; and
transmitting the third signal to the first access node based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

FIG. 12 is a schematic structural diagram of a first access node according to an embodiment of the present application. As shown in FIG. 12, the first access node includes a memory 1220, a transceiver 1210 and a processor 1200, where the processor 1200 and the memory 1220 may also be physically arranged separately.

The memory 1220 is used for storing a computer programs, and the transceiver 1210 is used for receiving and transmitting data under control of the processor 1200.

Specifically, the transceiver 1210 is used for receiving and transmitting under the control of the processor 1200.

In FIG. 12, a bus architecture may include any number of interconnected buses and bridges, which are linked together through various circuits of one or more processors represented by the processor 1200 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1210 may include multiple elements, i.e., including a transmitter and a receiver, units for providing communication with various other devices over transmission media including wireless channels, wired channels, fiber optic cables, and the like.

The processor 1200 is responsible for managing the bus architecture and general processing, and the memory 1220 may store data used by the processor 1200 when performing operations.

The processor 1200 may be a CPU, an ASIC, a FPGA or a CPLD, and the processor may also adopt a multi-core architecture.

The processor 1200 calls the computer program stored in the memory 1220 to perform any one of the methods provided by the embodiments of the present application according to an obtained executable instruction, for example:
determining a resource location of a first signal, where the resource location of the first signal is within at least one second time domain range included in a first time domain range; and
transmitting the first signal at the resource location of the first signal.

Optionally, the first signal is used for one or more of synchronization, cell discovery, or measurement.

Optionally, the method at least includes:
a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the methods further include:
receiving a first message transmitted from a terminal or a second access node, where the first message is used to trigger the first access node to determine the resource location of the first signal based on the M second time domain ranges.

Optionally, receiving the first message transmitted from the terminal includes:
determining a resource location of a second signal based on the resource location of the first signal determined within the first time domain range, where the second signal is used to trigger the first access node to determine the resource location of the first signal based on the M second time domain ranges; and
receiving the second signal transmitted from the terminal based on the determined resource location of the second signal.

Optionally, the first message further carries parameter information for adjusting a time length of the first time domain range and/or a time length of the second time domain range.

Optionally, after determining the resource location of the first signal based on the M second time domain ranges, the method further includes:
determining a resource location of a third signal based on a resource location of the first signal determined within a specified second time domain range, where the third signal is used to trigger a state transition of the first access node; and
receiving the third signal based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

Optionally, the first access node is in an off state, a deactivated state, or an energy saving state.

Optionally, the method further includes:
transmitting parameter indication information to a terminal and/or a second access node, where the parameter indication information is used to indicate one or more of the following:
a time length of the first time domain range, a time length of the second time domain range, a value of M, a value of N, a value of a first parameter, a value of a second parameter, or a value of a third parameter.

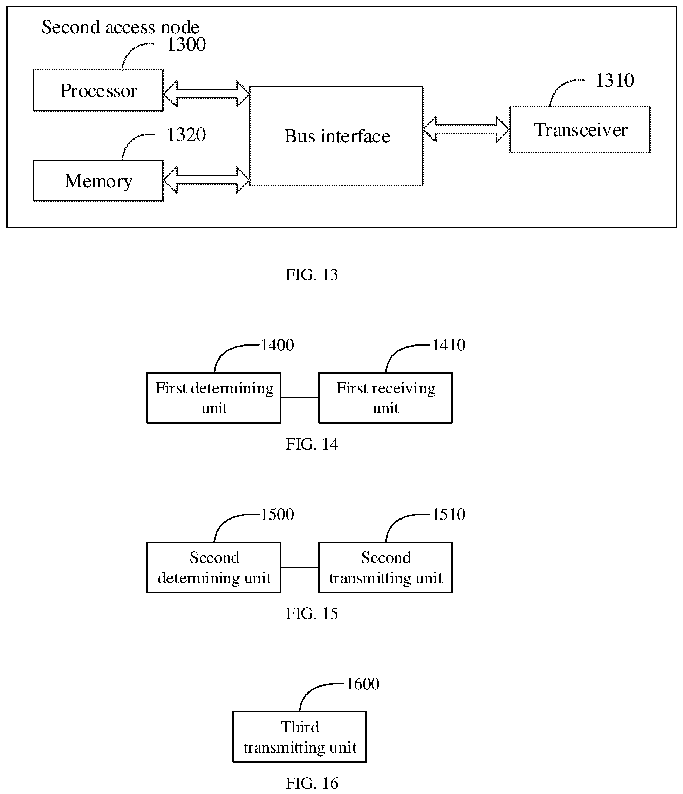

FIG. 13 is a schematic structural diagram of a second access node according to an embodiment of the present application. As shown in FIG. 13, the second access node includes a memory 1320, a transceiver 1310 and a processor 1300, where the processor 1300 and the memory 1320 may also be physically separated.

The memory 1320 is used for storing a computer program, and the transceiver 1310 is used for receiving and transmitting data under control of the processor 1300.

Specifically, the transceiver 1310 is used for receiving and transmitting data under the control of the processor 1300.

In FIG. 13, a bus architecture may include any number of interconnected buses and bridges, which are linked together through various circuits of one or more processors represented by the processor 1300 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1310 may include multiple elements, i.e., including a transmitter and a receiver, units for providing communication with various other devices over transmission media including wireless channels, wired channels, fiber optic cables, and the like.

The processor 1300 is responsible for managing the bus architecture and general processing, and the memory 1320 may store data used by the processor 1300 when performing operations.

The processor 1300 may be a CPU, an ASIC, a FPGA or a CPLD, and the processor may also adopt a multi-core architecture.

The processor 1300 calls the computer program stored in the memory 1320 to perform any one of the methods provided by the embodiments of the present application according to an obtained executable instruction, for example:
transmitting a first message to a first access node, where the first message is used to trigger the first access node to determine a resource location of a first signal based on at least one second time domain range included in a first time domain range.

Optionally, the first signal is used for one or more of synchronization, cell discovery, or measurement.

Optionally, the method at least includes:
a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, the first message further carries parameter information for adjusting a time length of the first time domain range and/or a time length of the second time domain range.

It should be noted that the above-mentioned terminal, the first access node and the second access node provided by the embodiment of the present application can implement all the method steps implemented in the above-mentioned method embodiments and can achieve the same effect. The parts and beneficial effects of the embodiment that are the same as those of the method embodiments is not be described in detail here.

FIG. 14 is a first schematic structural diagram of an apparatus for signal transmission according to an embodiment of the present application. The apparatus is applied to a terminal. As shown in FIG. 14, the apparatus includes:
a first determining unit 1400, used for determining a resource location of a first signal, where the resource location of the first signal is within at least one second time domain range included in a first time domain range; and
a first receiving unit 1410, used for receiving the first signal at the resource location of the first signal.

Optionally, the first signal is used for one or more of synchronization, cell discovery, or measurement.

Optionally, a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, the first determining unit 1400 is further used for:
determining a resource location of a second signal based on the resource location of the first signal determined within the first time domain range, where the second signal is used to trigger a first access node to determine the resource location of the first signal based on the M second time domain ranges; and
transmitting the second signal to the first access node based on the determined resource location of the second signal.

Optionally, the second signal further carries parameter information for adjusting a time length of the first time domain range and/or a time length of the second time domain range.

Optionally, the first determining unit 1400 is further used for:
determining a resource location of a third signal based on a resource location of the first signal determined within a specified second time domain range, where the third signal is used to trigger a state transition of a first access node; and
transmitting the third signal to the first access node based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

FIG. 15 is a second schematic structural diagram of an apparatus for signal transmission according to an embodiment of the present application. The apparatus is applied to a first access node. As shown in FIG. 15, the apparatus includes:
a second determining unit 1500, used for determining a resource location of a first signal, where the resource location of the first signal is within at least one second time domain range included in a first time domain range; and
a second transmitting unit 1510, used for transmitting the first signal at the resource location of the first signal.

Optionally, the first signal is used for one or more of synchronization, cell discovery, or measurement.

Optionally, a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, determining the resource location of the first signal includes:
determining M second time domain ranges within the first time domain range, where M is a quantity of the at least one second time domain range; and
determining the resource location of the first signal based on the M second time domain ranges.

Optionally, determining the M second time domain ranges within the first time domain range includes:
determining a first M consecutive second time domain ranges among N second time domain ranges included in the first time domain range as the M second time domain ranges, where N is an integer greater than M; or
determining M consecutive second time domain ranges within the first time domain range based on a first parameter, where the first parameter is used to indicate a starting position of the M consecutive second time domain ranges within the first time domain range.

Optionally, determining the resource location of the first signal based on the M second time domain ranges includes:
determining a resource location of a first signal set within each second time domain range among the M second time domain ranges, where the first signal set includes first signals in multiple beam directions; or
determining a resource location of a first signal in one beam direction within each second time domain range among the M second time domain ranges, where beam directions of first signals are different in any two neighboring second time domain ranges.

Optionally, before determining the resource location of the first signal based on the M second time domain ranges, the apparatus further includes a second receiving unit, and second receiving unit is used for:
receiving a first message transmitted from a terminal or a second access node, where the first message is used to trigger a first access node to determine the resource location of the first signal based on the M second time domain ranges.

Optionally, receiving the first message transmitted from the terminal includes:
determining a resource location of a second signal based on the resource location of the first signal determined within the first time domain range, where the second signal is used to trigger the first access node to determine the resource location of the first signal based on the M second time domain ranges; and
receiving the second signal transmitted from the terminal based on the determined resource location of the second signal.

Optionally, the first message further carries parameter information for adjusting a time length of the first time domain range and/or a time length of the second time domain range.

Optionally, the second determining unit 1500 is further used for:
determining a resource location of a third signal based on a resource location of the first signal determined within a specified second time domain range, where the third signal is used to trigger a state transition of the first access node; and
receiving the third signal based on the determined resource location of the third signal.

Optionally, the state transition includes any one of the following:
a transition from an off state to an on state;
a transition from a deactivated state to an activated state; or
a transition from an energy saving state to a normal state.

Optionally, the specified second time domain range is determined based on a second parameter or a third parameter,
where the second parameter is used to indicate a position of the specified second time domain range among the M second time domain ranges; and
the third parameter is used to indicate a position of the specified second time domain range among N second time domain ranges included in the first time domain range, where N is an integer greater than M.

Optionally, the third signal further carries parameter information for adjusting a time length of the first time domain range and/or a time length of the second time domain range.

Optionally, the parameter information includes a time length of an adjusted first time domain range and/or a time length of an adjusted second time domain range, or a proportional factor for determining a time length of an adjusted first time domain range and/or a time length of an adjusted second time domain range.

Optionally, the first access node is in an off state, a deactivated state, or an energy saving state.

Optionally, the second transmitting unit 1510 is further used for:
transmitting parameter indication information to a terminal and/or a second access node, where the parameter indication information is used to indicate one or more of the following:
a time length of the first time domain range, a time length of the second time domain range, a value of M, a value of N, a value of a first parameter, a value of a second parameter, or a value of a third parameter.

FIG. 16 is a third schematic structural diagram of an apparatus for signal transmission provided in an embodiment of the present application. The apparatus is applied to a second access node. As shown in FIG. 16, the apparatus includes:
a third transmitting unit 1600, used for transmitting a first message to a first access node, where the first message is used to trigger the first access node to determine a resource location of a first signal based on at least one second time domain range included in a first time domain range.

Optionally, the first signal is used for one or more of synchronization, cell discovery, or measurement.

Optionally, a time length of each second time domain range being equal; and/or
the at least one second time domain range being multiple consecutive second time domain ranges within the first time domain range; and/or
the first time domain range including N second time domain ranges, where N is an integer greater than M, and M is a quantity of the at least one second time domain range.

Optionally, the first message further carries parameter information for adjusting a time length of the first time domain range and/or a time length of the second time domain range.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted that the apparatuses provided by the embodiments of the present application may implement all the method steps implemented by the above-mentioned method embodiment, and may achieve the same effect. The parts and beneficial effects of the present embodiment that are the same as those of the method embodiment is not described in detail here.

An embodiment of the present application further provides a computer-readable storage medium, where the computer-readable storage medium stores a computer program, and the computer program is used to cause a computer to performs methods for signal transmission provided by the above embodiments.

It should be noted that the computer-readable storage medium provided by the embodiment of the present application may implement all the method steps implemented in the above method embodiment and may achieve the same effect. The parts and beneficial effects of this embodiment that are the same as those of the method embodiment is not described in detail here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions provided by the embodiments of the present application may be applied to a variety of systems, especially 5G systems. For example, applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present application.

The network device involved in the embodiments of the present application may be a base station, and the base station may include multiple cells providing services for a terminal. Depending on specific application scenarios, the base station may also be called an access point (AP), or may be a device in the access network that communicates with wireless terminal through one or more sectors on the air interface, or other names. The network device may be used to exchange received air frames with Internet protocol (IP) packets, and act as a router between wireless terminal and the rest of the access network, and the rest of the access network may include an Internet protocol (IP) communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), a B5G base station in beyond 5th generation mobile communication system (B5G), a 6G base station in 6G (6th generation mobile communication technology) network architecture, may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As may be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It may be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It may be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for signal transmission, performed by a terminal, comprising:
determining a resource location of a first signal, wherein the resource location of the first signal is within at least one second time domain range comprised in a first time domain range; and
receiving the first signal at the resource location of the first signal.

2. The method of claim 1, wherein the first signal is used for one or more of synchronization, cell discovery, or measurement.

3. The method of claim 1, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

4. The method of any one of claims 1 to 3, wherein determining the resource location of the first signal comprises:
determining M second time domain ranges within the first time domain range, wherein M is a quantity of the at least one second time domain range; and
determining the resource location of the first signal based on the M second time domain ranges.

5. The method of claim 4, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

6. The method of claim 4 or 5, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

7. The method of any one of claims 4 to 6, wherein before determining the resource location of the first signal based on the M second time domain ranges, the method further comprises:
determining a resource location of a second signal based on the resource location of the first signal determined within the first time domain range, wherein the second signal is used to trigger a first access node to determine the resource location of the first signal based on the M second time domain ranges; and
transmitting the second signal to the first access node based on the determined resource location of the second signal.

8. The method of claim 7, wherein the second signal further carries parameter information for adjusting a time length of the first time domain range and/or a time length of the second time domain range.

9. The method of any one of claims 4 to 7, wherein after determining the resource location of the first signal based on the M second time domain ranges, the method further comprises:
determining a resource location of a third signal based on a resource location of the first signal determined within a specified second time domain range, wherein the third signal is used to trigger a state transition of a first access node; and
transmitting the third signal to the first access node based on the determined resource location of the third signal.

10. The method of claim 9, wherein the state transition comprises any one of the following:
a transition from an off state to an on state;
a transition from a deactivated state to an activated state; or
a transition from an energy saving state to a normal state.

11. The method of claim 9, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

12. The method of claim 9, wherein the third signal further carries parameter information for adjusting a time length of the first time domain range and/or a time length of the second time domain range.

13. The method of claim 8 or 12, wherein the parameter information comprises a time length of an adjusted first time domain range and/or a time length of an adjusted second time domain range, or a proportional factor for determining a time length of an adjusted first time domain range and/or a time length of an adjusted second time domain range.

14. A method for signal transmission, performed by a first access node, comprising:
determining a resource location of a first signal, wherein the resource location of the first signal is within at least one second time domain range comprised in a first time domain range; and
transmitting the first signal at the resource location of the first signal.

15. The method of claim 14, wherein the first signal is used for one or more of synchronization, cell discovery, or measurement.

16. The method of claim 14, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

17. The method of any one of claims 14 to 16, wherein determining the resource location of the first signal comprises:
determining M second time domain ranges within the first time domain range, wherein M is a quantity of the at least one second time domain range; and
determining the resource location of the first signal based on the M second time domain ranges.

18. The method of claim 17, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

19. The method of claim 17 or 18, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

20. The method of any one of claims 17 to 19, wherein before determining the resource location of the first signal based on the M second time domain ranges, the method further comprises:
receiving a first message transmitted from a terminal or a second access node, wherein the first message is used to trigger the first access node to determine the resource location of the first signal based on the M second time domain ranges.

21. The method of claim 20, wherein receiving the first message transmitted from the terminal comprises:
determining a resource location of a second signal based on the resource location of the first signal determined within the first time domain range, wherein the second signal is used to trigger the first access node to determine the resource location of the first signal based on the M second time domain ranges; and
receiving the second signal transmitted from the terminal based on the determined resource location of the second signal.

22. The method of claim 20, wherein the first message further carries parameter information for adjusting a time length of the first time domain range and/or a time length of the second time domain range.

23. The method of any one of claims 17 to 20, wherein after determining the resource location of the first signal based on the M second time domain ranges, the method further comprises:
determining a resource location of a third signal based on a resource location of the first signal determined within a specified second time domain range, wherein the third signal is used to trigger a state transition of the first access node; and
receiving the third signal based on the determined resource location of the third signal.

24. The method of claim 23, wherein the state transition comprises any one of the following:
a transition from an off state to an on state;
a transition from a deactivated state to an activated state; or
a transition from an energy saving state to a normal state.

25. The method of claim 23, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

26. The method of claim 23, wherein the third signal further carries parameter information for adjusting a time length of the first time domain range and/or a time length of the second time domain range.

27. The method of claim 22 or 26, wherein the parameter information comprises a time length of an adjusted first time domain range and/or a time length of an adjusted second time domain range, or a proportional factor for determining a time length of an adjusted first time domain range and/or a time length of an adjusted second time domain range.

28. The method of claim 14, wherein the first access node is in an off state, a deactivated state, or an energy saving state.

29. The method of claim 14, further comprising:
transmitting parameter indication information to a terminal and/or a second access node, wherein the parameter indication information is used to indicate one or more of the following:
a time length of the first time domain range, a time length of the second time domain range, a value of M, a value of N, a value of a first parameter, a value of a second parameter, or a value of a third parameter.

30. A method for signal transmission, performed by a second access node, comprising:
transmitting a first message to a first access node, wherein the first message is used to trigger the first access node to determine a resource location of a first signal based on at least one second time domain range comprised in a first time domain range.

31. The method of claim 30, wherein the first signal is used for one or more of synchronization, cell discovery, or measurement.

32. The method of claim 30, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

33. The method of claim 30, wherein the first message further carries parameter information for adjusting a time length of the first time domain range and/or a time length of the second time domain range.

34. A terminal, comprising a memory, a transceiver and a processor,
wherein the memory is used for storing a computer program, the transceiver is used for receiving and transmitting data under control of the processor, and the processor is used for reading the computer program in the memory and performing the following operations:
determining a resource location of a first signal, wherein the resource location of the first signal is within at least one second time domain range comprised in a first time domain range; and
receiving the first signal at the resource location of the first signal.

35. The terminal of claim 34, wherein the first signal is used for one or more of synchronization, cell discovery, or measurement.

36. The terminal of claim 34, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

37. The terminal of any one of claims 34 to 36, wherein determining the resource location of the first signal comprises:
determining M second time domain ranges within the first time domain range, wherein M is a quantity of the at least one second time domain range; and
determining the resource location of the first signal based on the M second time domain ranges.

38. The terminal of claim 37, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

39. The terminal of claim 37 or 38, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

40. The terminal of any one of claims 37 to 39, wherein before determining the resource location of the first signal based on the M second time domain ranges, the operations further comprise:
determining a resource location of a second signal based on the resource location of the first signal determined within the first time domain range, wherein the second signal is used to trigger a first access node to determine the resource location of the first signal based on the M second time domain ranges; and
transmitting the second signal to the first access node based on the determined resource location of the second signal.

41. The terminal of claim 40, wherein the second signal further carries parameter information for adjusting a time length of the first time domain range and/or a time length of the second time domain range.

42. The terminal of any one of claims 37 to 40, wherein after determining the resource location of the first signal based on the M second time domain ranges, the operations further comprise:
determining a resource location of a third signal based on a resource location of the first signal determined within a specified second time domain range, wherein the third signal is used to trigger a state transition of a first access node; and
transmitting the third signal to the first access node based on the determined resource location of the third signal.

43. The terminal of claim 42, wherein the state transition comprises any one of the following:
a transition from an off state to an on state;
a transition from a deactivated state to an activated state; or
a transition from an energy saving state to a normal state.

44. The terminal of claim 42, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

45. The terminal of claim 42, wherein the third signal further carries parameter information for adjusting a time length of the first time domain range and/or a time length of the second time domain range.

46. The terminal of claim 41 or 45, wherein the parameter information comprises a time length of an adjusted first time domain range and/or a time length of an adjusted second time domain range, or a proportional factor for determining a time length of an adjusted first time domain range and/or a time length of an adjusted second time domain range.

47. A first access node, comprising a memory, a transceiver and a processor,
wherein the memory is used for storing a computer program, the transceiver is used for receiving and transmitting data under control of the processor, and the processor is used for reading the computer program in the memory and performing the following operations:
determining a resource location of a first signal, wherein the resource location of the first signal is within at least one second time domain range comprised in a first time domain range; and
transmitting the first signal at the resource location of the first signal.

48. The first access node of claim 47, wherein the first signal is used for one or more of synchronization, cell discovery, or measurement.

49. The first access node of claim 47, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

50. The first access node of any one of claims 47 to 49, wherein determining the resource location of the first signal comprises:
determining M second time domain ranges within the first time domain range, wherein M is a quantity of the at least one second time domain range; and
determining the resource location of the first signal based on the M second time domain ranges.

51. The first access node of claim 50, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

52. The first access node of claim 50 or 51, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

53. The first access node of any one of claims 50 to 52, wherein before determining the resource location of the first signal based on the M second time domain ranges, the operations further comprise:
receiving a first message transmitted from a terminal or a second access node, wherein the first message is used to trigger the first access node to determine the resource location of the first signal based on the M second time domain ranges.

54. The first access node of claim 53, wherein receiving the first message transmitted from the terminal comprises:
determining a resource location of a second signal based on the resource location of the first signal determined within the first time domain range, wherein the second signal is used to trigger the first access node to determine the resource location of the first signal based on the M second time domain ranges; and
receiving the second signal transmitted from the terminal based on the determined resource location of the second signal.

55. The first access node of claim 53, wherein the first message further carries parameter information for adjusting a time length of the first time domain range and/or a time length of the second time domain range.

56. The first access node of any one of claims 50 to 53, wherein after determining the resource location of the first signal based on the M second time domain ranges, the operations further comprise:
determining a resource location of a third signal based on a resource location of the first signal determined within a specified second time domain range, wherein the third signal is used to trigger a state transition of the first access node; and
receiving the third signal based on the determined resource location of the third signal.

57. The first access node of claim 56, wherein the state transition comprises any one of the following:
a transition from an off state to an on state;
a transition from a deactivated state to an activated state; or
a transition from an energy saving state to a normal state.

58. The first access node of claim 56, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

59. The first access node of claim 56, wherein the third signal further carries parameter information for adjusting a time length of the first time domain range and/or a time length of the second time domain range.

60. The first access node of claim 55 or 59, wherein the parameter information comprises a time length of an adjusted first time domain range and/or a time length of an adjusted second time domain range, or a proportional factor for determining a time length of an adjusted first time domain range and/or a time length of an adjusted second time domain range.

61. The first access node of claim 47, wherein the first access node is in an off state, a deactivated state, or an energy saving state.

62. The first access node of claim 47, wherein the operations further comprise:
transmitting parameter indication information to a terminal and/or a second access node, wherein the parameter indication information is used to indicate one or more of the following:
a time length of the first time domain range, a time length of the second time domain range, a value of M, a value of N, a value of a first parameter, a value of a second parameter, or a value of a third parameter.

63. A second access node, comprising a memory, a transceiver and a processor,
wherein the memory is used for storing a computer program, the transceiver is used for receiving and transmitting data under control of the processor, and the processor is used for reading the computer program in the memory and performing the following operations:
transmitting a first message to a first access node, wherein the first message is used to trigger the first access node to determine a resource location of a first signal based on at least one second time domain range comprised in a first time domain range.

64. The second access node of claim 63, wherein the first signal is used for one or more of synchronization, cell discovery, or measurement.

65. The second access node of claim 63, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

66. The second access node of claim 63, wherein the first message further carries parameter information for adjusting a time length of the first time domain range and/or a time length of the second time domain range.

67. An apparatus for signal transmission, comprising:
a first determining unit, used for determining a resource location of a first signal, wherein the resource location of the first signal is within at least one second time domain range comprised in a first time domain range; and
a first receiving unit, used for receiving the first signal at the resource location of the first signal.

68. The apparatus of claim 67, wherein the first signal is used for one or more of synchronization, cell discovery, or measurement.

69. The apparatus of claim 67, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

70. The apparatus of any one of claims 67 to 69, wherein determining the resource location of the first signal comprises:
determining M second time domain ranges within the first time domain range, wherein M is a quantity of the at least one second time domain range; and
determining the resource location of the first signal based on the M second time domain ranges.

71. The apparatus of claim 70, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

72. The apparatus of claim 70 or 71, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

73. The apparatus of any one of claims 70 to 72, wherein the first determining unit is further used for:
determining a resource location of a second signal based on the resource location of the first signal determined within the first time domain range, wherein the second signal is used to trigger a first access node to determine the resource location of the first signal based on the M second time domain ranges; and
transmitting the second signal to the first access node based on the determined resource location of the second signal.

74. The apparatus of claim 73, wherein the second signal further carries parameter information for adjusting a time length of the first time domain range and/or a time length of the second time domain range.

75. The apparatus of any one of claims 70 to 73, wherein the first determining unit is further used for:
determining a resource location of a third signal based on a resource location of the first signal determined within a specified second time domain range, wherein the third signal is used to trigger a state transition of a first access node; and
transmitting the third signal to the first access node based on the determined resource location of the third signal.

76. The apparatus of claim 75, wherein the state transition comprises any one of the following:
a transition from an off state to an on state;
a transition from a deactivated state to an activated state; or
a transition from an energy saving state to a normal state.

77. The apparatus of claim 75, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

78. The apparatus of claim 75, wherein the third signal further carries parameter information for adjusting a time length of the first time domain range and/or a time length of the second time domain range.

79. The apparatus of claim 74 or 78, wherein the parameter information comprises a time length of an adjusted first time domain range and/or a time length of an adjusted second time domain range, or a proportional factor for determining a time length of an adjusted first time domain range and/or a time length of an adjusted second time domain range.

80. An apparatus for signal transmission, comprising:
a second determining unit, used for determining a resource location of a first signal, wherein the resource location of the first signal is within at least one second time domain range comprised in a first time domain range; and
a second transmitting unit, used for transmitting the first signal at the resource location of the first signal.

81. The apparatus of claim 80, wherein the first signal is used for one or more of synchronization, cell discovery, or measurement.

82. The apparatus of claim 80, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

83. The apparatus of any one of claims 80 to 82, wherein determining the resource location of the first signal comprises:
determining M second time domain ranges within the first time domain range, wherein M is a quantity of the at least one second time domain range; and
determining the resource location of the first signal based on the M second time domain ranges.

84. The apparatus of claim 81, wherein determining the M second time domain ranges within the first time domain range comprises:
determining a first M consecutive second time domain ranges among N second time domain ranges comprised in the first time domain range as the M second time domain ranges, wherein N is an integer greater than M; or
determining M consecutive second time domain ranges within the first time domain range based on a first parameter, wherein the first parameter is used to indicate a starting position of the M consecutive second time domain ranges within the first time domain range.

85. The apparatus of claim 83 or 84, wherein determining the resource location of the first signal based on the M second time domain ranges comprises:
determining a resource location of a first signal set within each second time domain range among the M second time domain ranges, wherein the first signal set comprises first signals in multiple beam directions; or
determining a resource location of a first signal in one beam direction within each second time domain range among the M second time domain ranges, wherein beam directions of first signals are different in any two neighboring second time domain ranges.

86. The apparatus of any one of claims 83 to 85, further comprising:
a second receiving unit, used for receiving a first message transmitted from a terminal or a second access node, wherein the first message is used to trigger a first access node to determine the resource location of the first signal based on the M second time domain ranges.

87. The apparatus of claim 86, wherein receiving the first message transmitted from the terminal comprises:
determining a resource location of a second signal based on the resource location of the first signal determined within the first time domain range, wherein the second signal is used to trigger the first access node to determine the resource location of the first signal based on the M second time domain ranges; and
receiving the second signal transmitted from the terminal based on the determined resource location of the second signal.

88. The apparatus of claim 86, wherein the first message further carries parameter information for adjusting a time length of the first time domain range and/or a time length of the second time domain range.

89. The apparatus of any one of claims 83 to 86, wherein the second determining unit is further used for:
determining a resource location of a third signal based on a resource location of the first signal determined within a specified second time domain range, wherein the third signal is used to trigger a state transition of the first access node; and
receiving the third signal based on the determined resource location of the third signal.

90. The apparatus of claim 89, wherein the state transition comprises any one of the following:
a transition from an off state to an on state;
a transition from a deactivated state to an activated state; or
a transition from an energy saving state to a normal state.

91. The apparatus of claim 89, wherein the specified second time domain range is determined based on a second parameter or a third parameter,
wherein the second parameter is used to indicate a position of the specified second time domain range among the M second time domain ranges; and
the third parameter is used to indicate a position of the specified second time domain range among N second time domain ranges comprised in the first time domain range, wherein N is an integer greater than M.

92. The apparatus of claim 89, wherein the third signal further carries parameter information for adjusting a time length of the first time domain range and/or a time length of the second time domain range.

93. The apparatus of claim 88 or 92, wherein the parameter information comprises a time length of an adjusted first time domain range and/or a time length of an adjusted second time domain range, or a proportional factor for determining a time length of an adjusted first time domain range and/or a time length of an adjusted second time domain range.

94. The apparatus of claim 80, wherein the second transmitting unit is further used for:
transmitting parameter indication information to a terminal and/or a second access node, wherein the parameter indication information is used to indicate one or more of the following:
a time length of the first time domain range, a time length of the second time domain range, a value of M, a value of N, a value of a first parameter, a value of a second parameter, or a value of a third parameter.

95. An apparatus for signal transmission, comprising:
a third transmitting unit, used for transmitting a first message to a first access node, wherein the first message is used to trigger the first access node to determine a resource location of a first signal based on at least one second time domain range comprised in a first time domain range.

96. The apparatus of claim 95, wherein the first signal is used for one or more of synchronization, cell discovery, or measurement.

97. The apparatus of claim 95, wherein the second time domain range satisfies one or more of the following:
a time length of each second time domain range being equal;
the at least one second time domain range being multiple consecutive second time domain ranges within the first time domain range; or
the first time domain range comprising N second time domain ranges, wherein N is an integer greater than M, and M is a quantity of the at least one second time domain range.

98. The apparatus of claim 95, wherein the first message further carries parameter information for adjusting a time length of the first time domain range and/or a time length of the second time domain range.

99. A computer-readable storage medium, wherein the computer-readable storage medium stores a computer program, and the computer program is used to cause a computer to perform the method of any one of claims 1 to 13, or the method of any one of claims 14 to 29, or the method of any one of claims 30 to 33.
